# EUROPÄISCHE PATENTSCHRIFT

(11) **EP 0 992 025 B1**
(45) Veröffentlichungstag und Bekanntmachung des Hinweises auf die Patenterteilung: **17.07.2002**
(21) Anmeldenummer: 98905193.3
(22) Anmeldetag: 05.03.1998
(51) Int. Cl.: G07F 7/10, G07F 7/08

(54) **Transaktionsverfahren mit einem tragbaren Identifizierungselement**
Transaction method using a mobile identification element
Procédé de transaction utilisant un élément d'identification portatif

(30) Priorität: 27.06.1997 CH 156497
(43) Veröffentlichungstag der Anmeldung: 12.04.2000
(73) Patentinhaber: Swisscom Mobile AG, 3050 Bern (CH)
(72) Erfinder: RITTER, Rudolf, CH-3052 Zollikofen (CH)
(74) Vertreter: BOVARD AG - Patentanwälte
(86) Internationale Anmeldenummer: CH9800086
(87) Internationale Veröffentlichungsnummer: WO9837524

(56) Entgegenhaltungen:
- EP-A- 0 708 547
- EP-A- 0 758 777
- EP-A- 0 780 802
- WO-A-94/11849
- WO-A-96/13814
- WO-A-96/18981

## Beschreibung

Die vorliegende Erfindung betrifft ein Verfahren und eine Vorrichtung zur Übermittlung von Aufträgen in einem Telekommunikationsnetz. Die Erfindung betrifft insbesondere ein Transaktionsverfahren zwischen einem Kunden und einem fixen Point-of-Transaction-Gerät, das durch ein Telekommunikationsnetz mit einem Server verbunden ist, und eine für dieses Transaktionsverfahren geeignete Vorrichtung.

Gemäss dem bisherigen Stand der Technik werden Transaktionen zwischen einem Kunden (oder Client, C) und einem Terminal, hier Point-of-Transaction (POT) genannt, zum Beispiel einem Point-of-Sale (POS), oft mit einer elektronischen Zahlungskarte ausgeführt. Debit- und Kreditkarten werden zum Beispiel an Kassen in Geschäften, bei Tankstellen, usw. verwendet. Die Karte umfasst meistens Speichermittel, zum Beispiel einen Magnetstreifen und/oder ein Chip, in welchem unter anderem die Identifizierung des Kunden gespeichert ist. Um eine Transaktion mit dem Besitzer oder Betreiber eines POT zu tätigen, zum Beispiel um einen Artikel in einem Geschäft zu bezahlen, muss der Kunde seine Karte in einen geeigneten Kartenleser im POT-Gerät einschieben. Der POT liest dann die Identifizierung des Kunden in der Karte, ermittelt und zeigt den zu bezahlenden Betrag an, prüft gegebenenfalls die Solvenz des Kunden und fordert vom Kunden, dass er die Transaktion mit einer Bestätigungstaste auf dem POT-Gerät bestätigt. Wenn der Kunde solvent ist und seine Bestätigung eingegeben hat, werden die Kundenidentifizierung, der zu bezahlende Betrag und evtl. auch eine POT- Identifizierung an einen durch ein Telekommunikationsnetz mit dem POT verbundenen Finanzserver übermittelt, der von einem Finanzinstitut verwaltet wird. Entsprechend wird sofort oder später das Konto des Kunden bei diesem Finanzinstitut belastet.

Nachteilig in diesem Verfahren ist die Notwendigkeit, die Karte des Kunden in ein fremdes Gerät einschieben zu müssen. Die Kunden haben normalerweise ihre Karte nicht zur Hand, dafür zum Beispiel im Portemonnaie; eine sehr schnelle Transaktion ist also nicht möglich. Gelegentlich ist auch die Öffnung zum Einführen der Karte in das Lesegerät des POT nicht leicht zugänglich; dies ist besonders dann der Fall, wenn der POT ein Ticketautomat für Parkhäuser oder ein Zahlungsautomat ist, der vom Automobilisten ohne Aussteigen aus dem Wagen bedient werden soll. Ausserdem können betrügerische Handlungen oder nicht berechtigte Lesungen von Speicherbereichen der Karte im POT durchgeführt werden.

Sogar wenn heutzutage gewisse Chipkarten einen Mikroprozessor enthalten, sind diese Debit- und Kreditkarten im wesentlichen passive Elemente, die Daten speichern, die im wesentlichen von der Elektronik des POT gespeichert und benützt werden. Der Kunde dagegen hat normalerweise keine Möglichkeit, direkt auf die Daten Zugriff zu nehmen, ohne sich an einen Schalter oder an einen Automaten des betreffenden Finanzinstituts, das die Karte herausgibt, zu begeben. Für den Kunden ist es also schwierig, die mit der Karte durchgeführten Transaktionen zu kontrollieren oder darüber Buch zu führen.

Diese Karten enthalten eine Kundenidentifizierung, die es indes nur erlaubt, die Kunden beim herausgebenden Finanzinstitut identifizieren zu lassen. Eine Karte kann also normalerweise nur für eine finanzielle Transaktion benutzt werden, wenn der Kunde und der POT-Betreiber beim gleichen Finanzinstitut affiliert sind. Dagegen ist der Gebrauch der Karte für andere Arten von Transaktionen - zum Beispiel für nicht finanzielle Transaktionen, für die aber die zuverlässige Identifizierung des Kunden/Kartenbesitzers benötigt wird - nicht vorgesehen. Für den Kunden ist es also unumgänglich, eine grosse Anzahl von Karten für jegliche Arten von finanziellen oder nicht finanziellen Transaktionen zu besitzen, zum Beispiel mehrere Debit- oder Kreditkarten, die von verschiedenen Finanzinstituten oder Ladenketten verwaltet werden, oder Abonnementskarten oder Zugangskarten für geschützte Zonen. Diese Karten sind meistens durch verschiedene PIN-Codes geschützt, die sich der Kunde mühsam einprägen muss.

Im Falle eines Diebstahles oder einer betrügerischen Handlung mit der Karte muss diese gesperrt werden. Die Sperrung kann jedoch erst erfolgen, wenn die Karte in ein entsprechendes Gerät eingeführt wird. Die gewöhnlichen Kreditkarten können jedoch weiterhin in manuell bedienten Apparaten gebraucht werden; eine sichere Sperrung der Karte ist also nicht möglich.

Ausser Debit- und Kreditkarten kennt man die sogenannten e-cash-Karten, welche es ermöglichen, Geldbeträge elektronisch zu speichern, welche anschliessend an verschiedenen POT-Stellen als Zahlungsmittel akzeptiert werden. Um diese Karten erneut mit Geldbeträgen versehen zu lassen, muss der Kunde am Schalter oder Automaten eines Finanzinstitutes vorstellig werden, was auch nicht immer möglich ist.

In der Patentanmeldung EP 708 547 A2 werden ein Verfahren und eine Vorrichtungsanordnung beschrieben, gemäss welchen einem Kunden mittels eines Mobilfunktelefons beim Erwerb von Produkten und Dienstleistungen Kredit zugesprochen werden kann. Gemäss dem in EP 708 547 A2 beschriebenen Verfahren vereinbaren der Kunde und der betreffende Verkäufer ein Transaktionspasswort, welches vom Kunden mittels seines Mobilfunktelefons zusammen mit einer Gerätenummer des Mobilfunkelefons und mit der diesem Mobilfunktelefon zugewiesenen Nummer an einen Empfangsteil einer Vorrichtung beim Verkäufer übermittelt wird. In der Vorrichtung beim Verkäufer wird zu den vom Kunden empfangenen Daten eine Verkäuferidentifizierung sowie ein Transaktionsbetrag hinzugefügt und alle diese Informationen an ein Kreditzentrum übermittelt, wo die Kreditwürdigkeit des betreffenden Kunden abgeklärt wird und das entsprechende Resultat an den Verkäufer übermittelt wird.

In der Patentanmeldung WO 94/11849 wird ein Verfahren beschrieben, gemäss welchem mittels SIM-Karten (Subscriber Identity Module), die mit Mobilfunktelefonen verbunden werden, Finanztransaktionen durchgeführt werden können. Im in WO 94/11849 beschriebenen Verfahren wird der betreffende Kunde durch die Dienste des Mobilfunknetzes auf Grund seiner SIM-Karte authentifiziert, nachdem dieser Kunde einen persönlichen Code zur berechtigten Benutzung dieser SIM-Karte eingegeben hat, und über ein dediziertes Kommunikationsnetz eine Verbindung zu einem vom Kunden gewählten Finanzinstitut erstellt, wo verschiedenen Finanztransaktionen durchgeführt werden können. Das Kommunikationsendgerät zum Einführen der SIM-Karte ist beispielsweise in einer Verkaufsstelle installiert und kann vom Kunden benutzt werden um einen Geldbetrag einzugeben, der vom gewählten Finanzinstitut angefragt und nach Erhalt dem Kunden belastet und via dem Kommunikationsendgerät der Verkaufsstelle mittels einer Zahlungsnummer zur Gutschrift bestätigt wird.

Eine Aufgabe der vorliegenden Erfindung ist es, ein Verfahren oder System vorzuschlagen, das erlaubt, die oben genannten Probleme zu vermeiden.

Eine weitere Aufgabe der vorliegenden Erfindung ist es, ein Transaktionsverfahren vorzuschlagen, das sowohl für finanzielle als auch für nicht finanzielle Transaktionen geeignet ist, und das einfacher und zuverlässiger ist, als die gewöhnlichen Transaktionsverfahren.

Gemäss der vorliegenden Erfindung werden diese Ziele durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch ein Transaktionsverfahren zwischen einem Kunden und einem mit einem Telekommunikationsnetz verbundenen POT-Gerät (zum Beispiel ein Point-of-Sale, POS) erreicht, das durch dieses Telekommunikationsnetz mit einem Server verbunden ist, wobei das Verfahren die Verknüpfung im POT-Gerät von mindestens einer Kundenidentifizierung mit einer POT-Gerätidentifizierung, die im POT-Gerät gelesen oder erfasst wird, und mit transaktionsspezifischen Daten zu einem Transaktionsbeleg, sowie die Übermittlung dieses Transaktionsbelegs durch das Telekommunikationsnetz an den Server umfasst, wobei die Kundenidentifizierung im Speicher eines tragbaren Identifizierungselementes des Kunden gespeichert ist, das mindestens einen Prozessor enthält und so eingerichtet ist, dass es über eine kontaktlose Schnittstelle mit dem POT-Gerät kommunizieren kann, wobei die Kundenidentifizierung im Identifizierungselement gelesen und durch die kontaktlose Schnittstelle an das POT-Gerät übertragen wird, wobei vor der Übermittlung des Transaktionsbelegs an den Server vom POT-Gerät eine Belastungsaufforderung, welche mindestens die transaktionsspezifischen Daten und die Kundenidentifizierung umfasst, direkt durch die kontaktlose Schnittstelle zur Überprüfung an das Identifizierungselement des Kunden übertragen wird.

In einer Ausführungsvariante kann der Server über eine Luftschnittstelle, zum Beispiel durch ein Mobilfunknetz, mit einem Mobilsystem (zum Beispiel einem Mobilgerät mit einer Identifizierungskarte) kommunizieren. Wenn die Transaktion eine finanzielle Transaktion ist, kann dadurch ein im Mobilgerät gespeicherter Geldbetrag aus dem Server mit über die Luftschnittstelle übermittelten elektronischen Meldungen nachgeladen werden. Der Geldbetrag wird vorzugsweise in einer Standardwährung definiert.

Die kontaktlose Übertragung zwischen dem Mobilsystem und dem POT-Gerät kann beispielsweise durch eine in der Identifizierungskarte oder im Mobilgerät integrierte elektromagnetische Schnittstelle, zum Beispiel in Form einer induktiven Spule, oder durch ein infrarotes Sender-Empfänger-System erfolgen.

Die Transaktionsbelege werden vorzugsweise mit einem symmetrischen Algorithmus verschlüsselt, bevor sie an den Server weitergeleitet werden, wobei der symmetrische Algorithmus einen mit einem asymmetrischen Algorithmus verschlüsselten Session-Schlüssel benützt. Die Transaktionsbelege werden vorzugsweise ausserdem zusätzlich zertifiziert, bevor sie an den Finanzserver weitergeleitet werden. Vorzugsweise wird eine end-to-end-gesicherte Übertragungsstrecke zwischen dem Mobilsystem und dem Finanzserver gewährleistet.

Die vorliegende Erfindung wird mit Hilfe der als Beispiel gegebenen Beschreibung besser verständlich und durch die beiliegenden Figuren veranschaulicht :
Die Figur 1 zeigt ein Blockschema, das den Informationsfluss in einer ersten Ausführungsform des Systems der Erfindung zeigt, wobei der Kunde mit einem Mobilfunktelefon ausgerüstet ist, vorzugsweise einem GSM-Mobilgerät, das spezielle Kurzmeldungen empfangen und senden kann.
Die Figur 2 zeigt ein Blockschema, das den Informationsfluss in einer zweiten Ausführungsform des Systems der Erfindung zeigt, wobei der Kunde mit einem Mobilfunktelefon ausgerüstet ist, vorzugsweise einem GSM-Mobilgerät, das spezielle Kurzmeldungen empfangen und senden kann, und wobei das POT-Gerät ein Internet- oder Intranet-taugliches Gerät ist.
Die Figur 3 zeigt ein Blockschema, das den Informationsfluss in einer dritten Ausführungsform des Systems der Erfindung zeigt, wobei der Kunde mit einem Transponder ausgerüstet ist, der mindestens spezielle Kurzmeldungen bearbeiten kann, und wobei das POT-Gerät spezielle Kurzmeldungen, zum Beispiel SMS- oder USSD-Kurzmeldungen, empfangen und/oder senden kann.
Die Figur 4 zeigt ein Blockschema, das den Informationsfluss in einer vierten Ausführungsform des Systems der Erfindung zeigt, wobei der Kunde mit einem Transponder ausgerüstet ist, der mindestens einen Teil der SICAP-Prozeduren ausführen kann, und wobei das POT-Gerät ein Internetoder Intranet-taugliches Gerät ist, das spezielle Kurzmeldungen, zum Beispiel SMS- oder USSD-Kurzmeldungen, empfangen und/oder senden kann.
Die Figur 5 zeigt ein Flussdiagramm eines Zahlungstransaktionsverfahrens gemäss der Erfindung.
Die Figur 6 zeigt ein Flussdiagramm eines möglichen Nachladetransaktionsverfahrens mit einer SIM-Karte.
Die Figur 7 zeigt ein Blockschema, das den Informationsfluss in einer weiteren möglichen Ausführungsform des Systems zeigt, die nur als Hintergrundinformation angeführt ist.
Die Figur 8 zeigt ein Blockschema, das den Informationsfluss in einer weiteren möglichen Ausführungsform des Systems zeigt, die nur als Hintergrundinformation angeführt ist.
Die Figur 9 zeigt ein Blockschema, das den Informationsfluss in einer weiteren möglichen Ausführungsform des Systems zeigt, die nur als Hintergrundinformation angeführt ist.
Die Figur 10 zeigt ein Blockschema, das die Signierung von Meldungen erklärt.
Die Figur 11 zeigt ein Blockschema, das die Überprüfung der Signatur erklärt.
Die Figur 12 zeigt ein Blockschema, das die Signierung und die Überprüfung der Signatur erklärt.
Die Figur 13 zeigt ein Blockschema, das die Verschlüsselung der Meldungen erklärt.

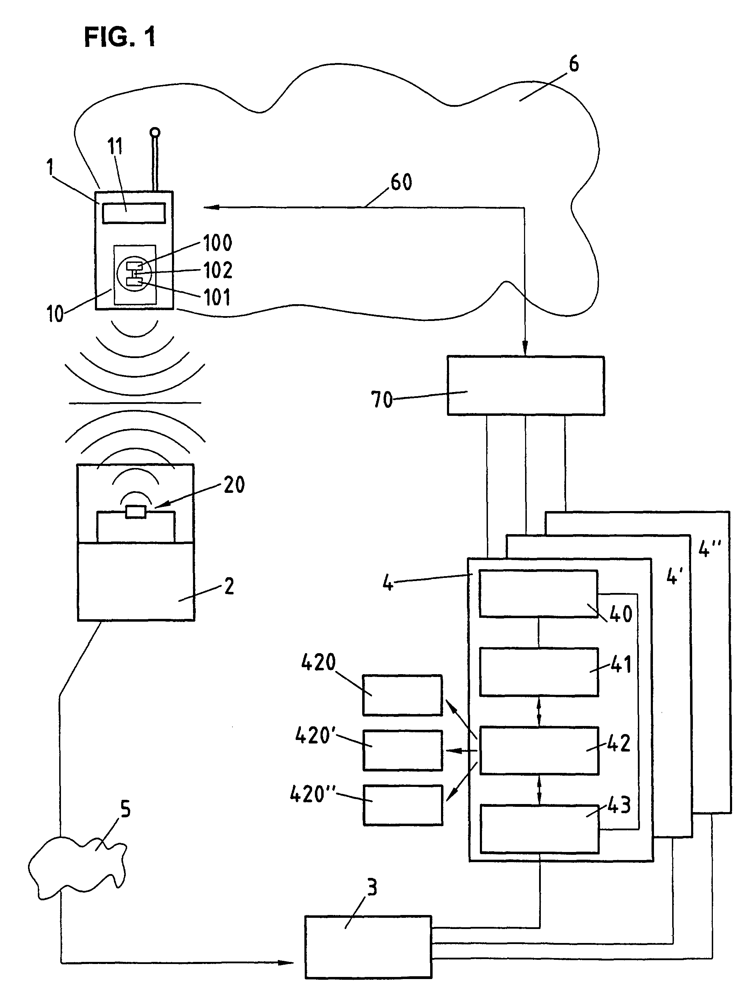

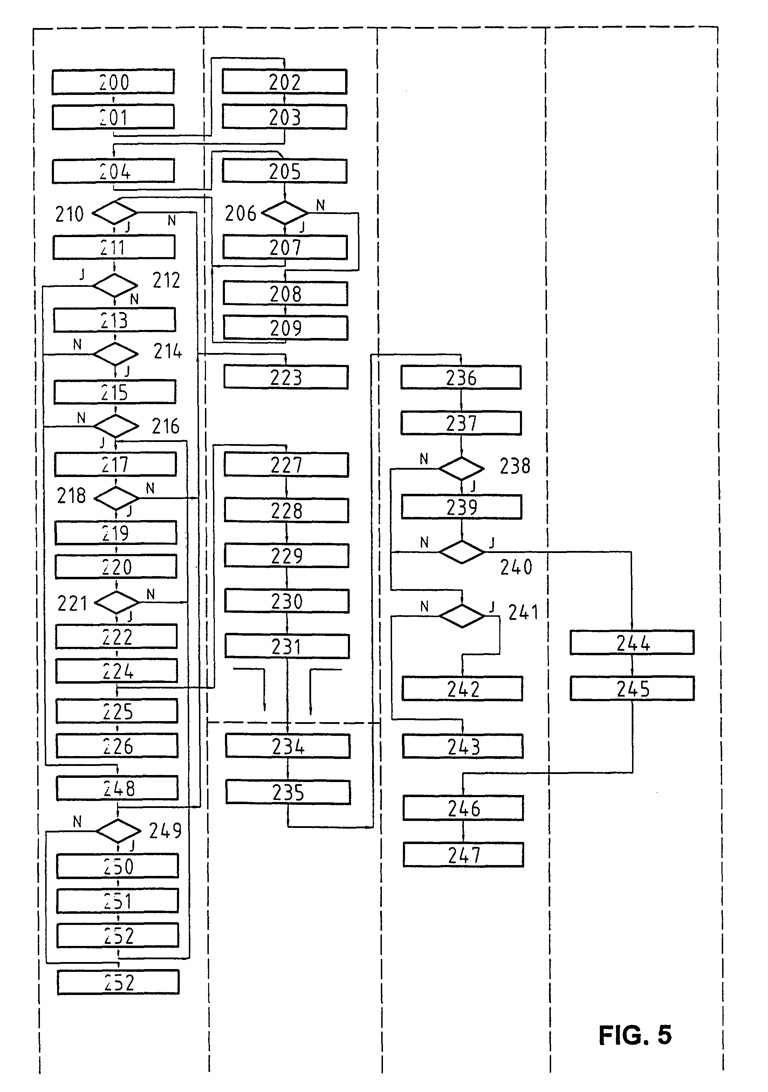

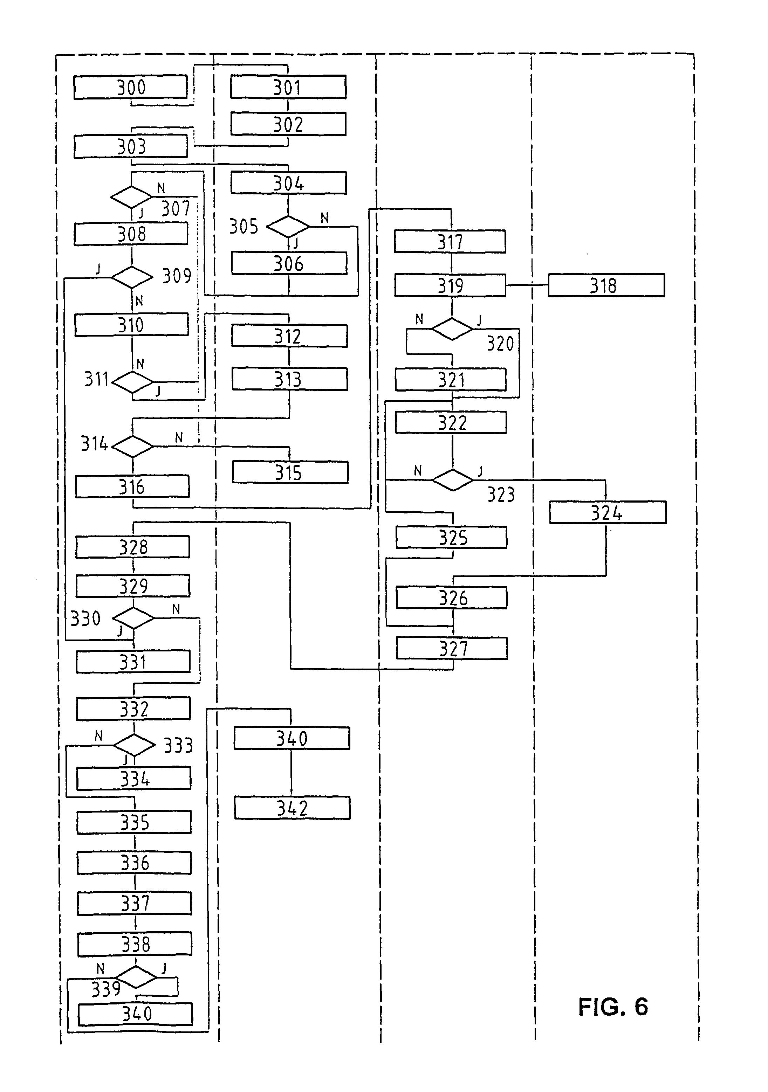

Das auf den Figuren 5 und 6 dargestellte Verfahren kann mit jedem beliebigen System, das auf den Figuren 1 bis 4 dargestellt ist, ausgeführt werden. Die erste und die zweite Variante benötigen beide ein Mobilgerät oder eine SIM-Karte mit einer zusätzlichen infraroten oder induktiven Schnittstelle, die später näher beschrieben wird.

Die Figur 1 zeigt den Informationsfluss in einer ersten Ausführungsform der Erfindung. Der Kunde ist mit einem Mobilsystem ausgerüstet, in diesem Fall mit einem GSM-Mobilgerät 1. Das Mobilgerät 1 enthält eine Identifizierungskarte 10, zum Beispiel eine SIM-Karte, mit der der Kunde im Netz 6, vorzugsweise einem GSM-Netz, identifiziert wird. Die SIM-Karte weist einen konventionellen Mikrokontroller 100 auf, welcher in den Kunststoffträger der Karte eingelassen ist und für die GSM-Funktionalitäten der Karte zuständig ist - wie sie zum Beispiel im Artikel « SIM CARDS » von T. Grigorova und 1. Leung beschrieben werden, welcher im « Telecommunication Journal of Australia », Vol. 43, No. 2, 1993, auf den Seiten 33 bis 38 erschienen ist - und für neue Funktionalitäten, welche zu einem späteren Zeitpunkt auf die SIM-Karte geladen werden. Die SIM-Karte weist ausserdem nicht dargestellte Kontaktmittel auf, über welche die Karte mit dem Mobilgerät 1 kommuniziert, in welchem sie eingeführt ist.

Die SIM-Karte weist ausserdem einen zweiten Prozessor 101 (CCI, Contactfree Chipcard Interface) auf, welcher für die kontaktlose Verbindung mit dem POT-Gerät 2 zuständig ist. Der zweite Prozessor führt unter anderem die weiter unten beschriebenen TTP (Trusted Third Party)-Funktionen aus, um chiffrierte und signierte Meldungen zu empfangen und zu senden. Eine logische Schnittstelle 102 verbindet die beiden Prozessoren 100 und 101.

Die kontaktlose Schnittstelle mit dem POT-Gerät 2 kann beispielsweise mindestens eine in der SIM-Karte integrierte und mit dem zweiten Prozessor 101 verbundene Spule aufweisen (nicht dargestellt), mit der Daten in beiden Richtungen über eine Funkstrecke induktiv übertragen werden. Eine induktive Spule kann in einer Variante auch im Gehäuse des Mobilgeräts integriert werden. In einer dritten Variante umfasst die kontaktlose Schnittstelle einen infraroten Sender-Empfänger am Gehäuse des Mobilgeräts. Die kontaktlose Kommunikation zwischen den beiden Geräten wird vorzugsweise verschlüsselt, zum Beispiel mit einem DEA-, DES-, TDES-, RSA- oder ECC-Sicherheitsalgorithmus.

Bei einer induktiven Signalübermittlung vom POT zur Chipkarte wird vorzugsweise ein Phasenmodulations-Verfahren eingesetzt, während in der umgekehrten Richtung vorzugsweise die Amplitude der Signale moduliert wird.

Die SIM-Karte enthält ein Sonderfeld IDUI (International Debit User Identification), mit dem der Kunde vom POT-Betreiber und/oder von einem Finanzinstitut identifiziert wird. Die Identifizierung IDUI wird vorzugsweise in einem gesicherten Speicherbereich eines der beiden Prozessoren 100, 101 gespeichert. Die IDUI enthält mindestens eine Identifizierung vom Netzbetreiber, eine Benutzernummer, die ihn von anderen Kunden beim selben Netzbetreiber identifiziert, eine Benutzerklassenangabe, die definiert, welche Dienste er benutzen darf, und optional noch eine Landidentifizierung. Ausserdem enthält die IDUI Sicherheitsdaten, unter anderem einen Transaktionszähler Tz, ein Lade-Token LT_{c}, und ein Time-Out-Feld TO, das die Validierungszeit angibt. Die Funktion dieser verschiedenen Daten wird später erläutert.

Das symbolisch dargestellte POT-Gerät 2 ist ebenfalls mit einem kontaktlosen Sender-Empfänger 20 versehen, zum Beispiel mit einer induktiven Spule oder mit einem infraroten Sender-Empfänger. Dank dieser Schnittstelle kann das Mobilsystem 1,10 kontaktlos mit dem Gerät 2 in beiden Richtungen kommunizieren.

Das Terminal oder POT-Gerät 2 kann zum Beispiel ein speziell mit einer Funkschnittstelle 20 ausgerüsteter Point-of-Sale (POS) in einem Geschäft sein. Das POT-Gerät 2 kann aber auch für nicht finanzielle Anwendungen bestimmt sein, zum Beispiel als Schlüssel für eine Zutrittskontrolle-Vorrichtung (« elektronischer Pförtner »), die das Kommen und Gehen in einer geschützten Örtlichkeit erlaubt, zum Beispiel in einem Hotelzimmer, in einem Betrieb, im Theater, in Kinos oder innerhalb eines Attraktionsparkes. Das POT-Gerät wird mit einem Sonderfeld POSID (Point Of Sale Identification) identifiziert. Die POSID hängt von der Anwendung ab; im Falle einer Geschäftskasse enthält sie eine Identifizierung vom Netzbetreiber, eine Areaidentifizierung (Teilgebiet in einem Land), eine POS-Nummer, die ihn von anderen POS beim selben Netzbetreiber identifiziert, eine POS-Klassenangabe, die definiert, welche Dienste er benutzen oder anbieten darf, das Datum, die Zeit, die benutzte Währung (SDR, Euro oder Dollars) und optional noch eine Landesidentifizierung.

Das POT-Gerät 2 wird vorzugsweise mit nicht dargestellten Dateneingabe-Mitteln versehen, zum Beispiel mit einer Tastatur, und mit nicht dargestellten Datenanzeige-Mitteln, zum Beispiel mit einem Bildschirm.

Die IDUI-Identifizierung wird dem POT über die kontaktlose Schnittstelle 10/101 übertragen, und im POT-Gerät mit der POSID und mit zusätzlichen transaktionspezifischen Daten, zum Beispiel mit dem erfassten Debitbetrag A, verknüpft, so dass ein elektronischer Transaktionsbeleg entsteht, der mit einem TTP (Trusted Third Party)- oder PTP (Point-to-Point)-Prozess verschlüsselt und signiert wird. Zusätzliche Erklärungen über das TTP-Verfahren werden später als Anhang angegeben.

Der Transaktionsbeleg wird dann über ein nicht dargestelltes Modem und durch das Kommunikationsnetz 5, zum Beispiel durch ein öffentliches Fix-Netz 5 oder durch ein Mobilfunknetz, an die ebenfalls mit dem Netz verbundene Clearingeinheit 3 übermittelt. Diese empfängt die elektronischen Belege von verschiedenen POT-Geräten 2, unabhängig vom Land oder Verkehrsbereich, und unabhängig vom Land oder Finanzinstitut des Kunden. In der Clearingeinheit 3 werden diese Transaktionsbelege nach Finanzinstitut, eventuell auch nach Operator, geordnet und den entsprechenden Finanzinstituten zugestellt. Clearingeinheiten an sich sind in der GSM-Technik schon bekannt und werden beispielsweise für das Sammeln und für die Weiterverteilung von Verbindungskosten verwendet. Die Clearingeinheit kann beispielsweise eine Datenbank enthalten, die angibt, mit welchem Finanzinstitut der vorher mit seinem IDUI identifizierte Kunden affiliert ist.

Die durch die Clearingeinheit 3 behandelten elektronischen Transaktionsbelege werden an den Finanzserver 4, 4' oder 4" des entsprechenden Finanzinstituts weitergeleitet. Im Finanzserver werden die eingereichten Transaktionsbelege zuerst entschlüsselt und in einem Zwischenspeicher 43 gespeichert. Ein Abgleichmanagement-Modul 42 schreibt dann den vom Kunden signierten Betrag den entsprechenden Bankkonten 420, 420' und/oder 420" des POT-Betreibers gut. Diese Konten können durch dasselbe oder durch ein anderes Finanzinstitut verwaltet werden. Das Abgleichmanagement-Modul führt ausserdem Kontrollbuchungen zum Konto des Kunden durch. Entsprechend wird das Konto 41 des Kunden beim Finanzinstitut belastet, oder werden die Transaktionsdaten für eine spätere Kontrolle gespeichert. Der Finanzserver enthält ausserdem einen TTP-Server 40, um Belege und Meldungen mit dem TTP (Trusted Third Party)-Algorithmus zu chiffrieren und zu signieren. Ausserdem ist jeder Finanzserver 4 mit einem SIM-Server 70 verbunden, zum Beispiel mit einem SICAP-Server. Das SICAP-Verfahren wurde unter anderem im Patent EP689368 beschrieben, und erlaubt, Dateien, Programme und auch Geldbeträge zwischen dem SICAP-Server 70 und der SIM-Karte 10 im Mobilgerät 1 über das öffentliche GSM-Netz 6 auszutauschen (Pfeil 60). Andere Übertragungsprotokolle können auch für die Datenübertragung zwischen dem SIM-Server und den SIM-Karten angewendet werden. Dadurch kann beispielsweise Geld auf der SIM-Karte 10 nachgeladen werden, wie später näher beschrieben. Der SIM-Server 70 ermöglicht ausserdem die gesteuerte Kommunikation zwischen dem Kunden und dem TTP-Server 40 beim Finanzinstitut.

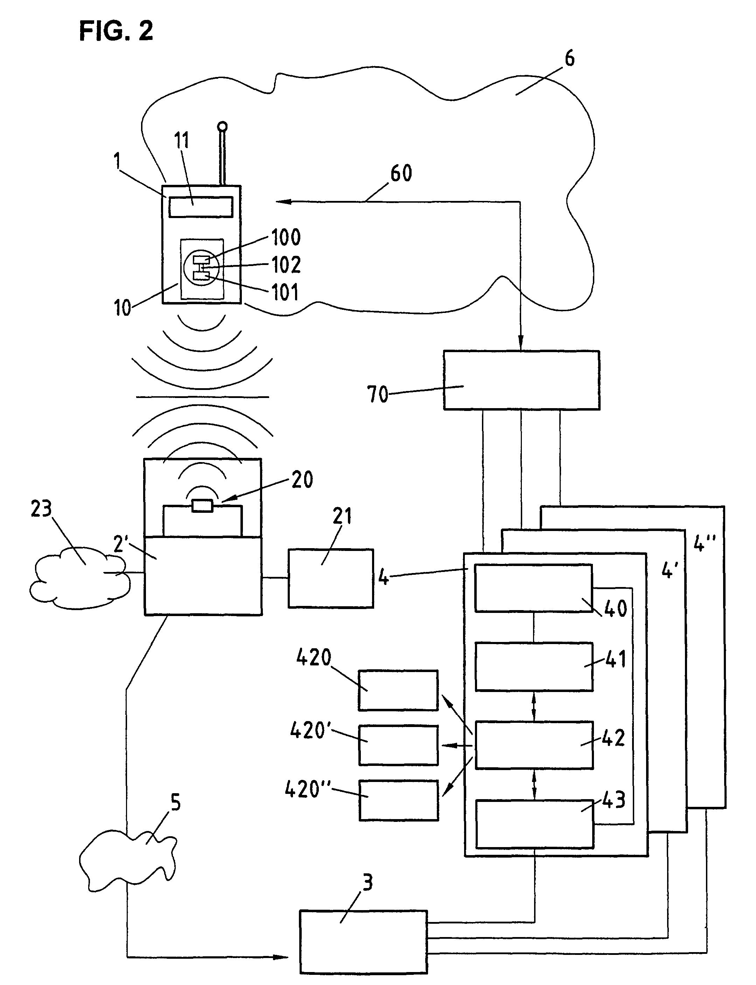

Die Figur 2 zeigt den Informationsfluss in einer zweiten Ausführungsform der Erfindung. Der Kunde ist ebenfalls in dieser Variante mit einem Mobilsystem ausgerüstet, zum Beispiel mit einem GSM-Funktelefon 1 mit einer SIM-Karte, vorzugsweise mit einer SICAP-tauglichen SIM-Karte. Ebenfalls ist eine induktive oder infrarote Schnittstelle im Mobilsystem 1 enthalten, mit der eine kontaktlose Verbindung mit dem POT-Gerät 2' durchgeführt werden kann. Daten und/oder Programme können auf diese Weise in beiden Richtungen zwischen dem POT-Gerät 2' und der SIM-Karte 10 im Mobilsystem ausgetauscht werden.

Das POT-Gerät 2' ist aber in diesem Fall ein Rechner, der vorzugsweise mit einem Netz, zum Beispiel im Internet oder einem Intranet, verbunden ist. Verschiedene Informationen oder Angebote, zum Beispiel Produkt-Angebote, können beispielsweise mit einem geeigneten Menü auf dem Bildschirm des Rechners 2 offeriert werden. Der Kunde kann diesen Rechner mit seinem Mobilgerät steuern. Beispielsweise kann er die Position eines Cursors in einem Menü von zum Verkauf angebotenen Produkten oder Informationen durch Betätigen der Cursor-Verschiebetasten auf der Tastatur 11 seines Mobiltelefons steuern. Die Cursor-Verschiebeinstruktionen werden über die kontaktlose Schnittstelle 101, 20 zum Rechner 2' gesendet. Der Benutzer betätigt eine Bestätigungstaste, zum Beispiel die Taste # auf seiner Tastatur, um die ausgewählte Menüoption zu bestätigen, zum Beispiel um ein Produkt zu bestellen.

Die im Mobilsystem 1,10 gespeicherte Kundenidentifizierung wird mit der POT-Gerät-ldentifizierung und mit den der angewählten Menüoption entsprechenden transaktionsspezifischen Daten in einem elektronischen Transaktionsbeleg verknüpft, TTP-oder PTP-verschlüsselt und signiert. Der Transaktionsbeleg enthält vorzugsweise eine aus der SIM-Karte 10 gewonnene Kundenidentifizierung IDUI, eine der angewählten Menüoption entsprechende Lieferantenidentifizierung, und eine der angewählten Menüoption entsprechende Produktidentifizierung, vorzugsweise im Flexmart-Format wie in der Patentanmeldung PCT/CH96/00464 (WO-A-98/28900) vorgeschlagen. Dieser Beleg wird durch ein Flexmart-Modul 21 ermittelt. Das Flexmart-Modul ist vorzugsweise eine vom Rechner 2' ausgeführte Software- Anwendung.

Analog zur ersten Ausführungsform wird dann der elektronische Transaktionsbeleg an den entsprechenden Finanzserver 4, 4' oder 4" durch die Clearingeinheit 3 übermittelt und dort verarbeitet.

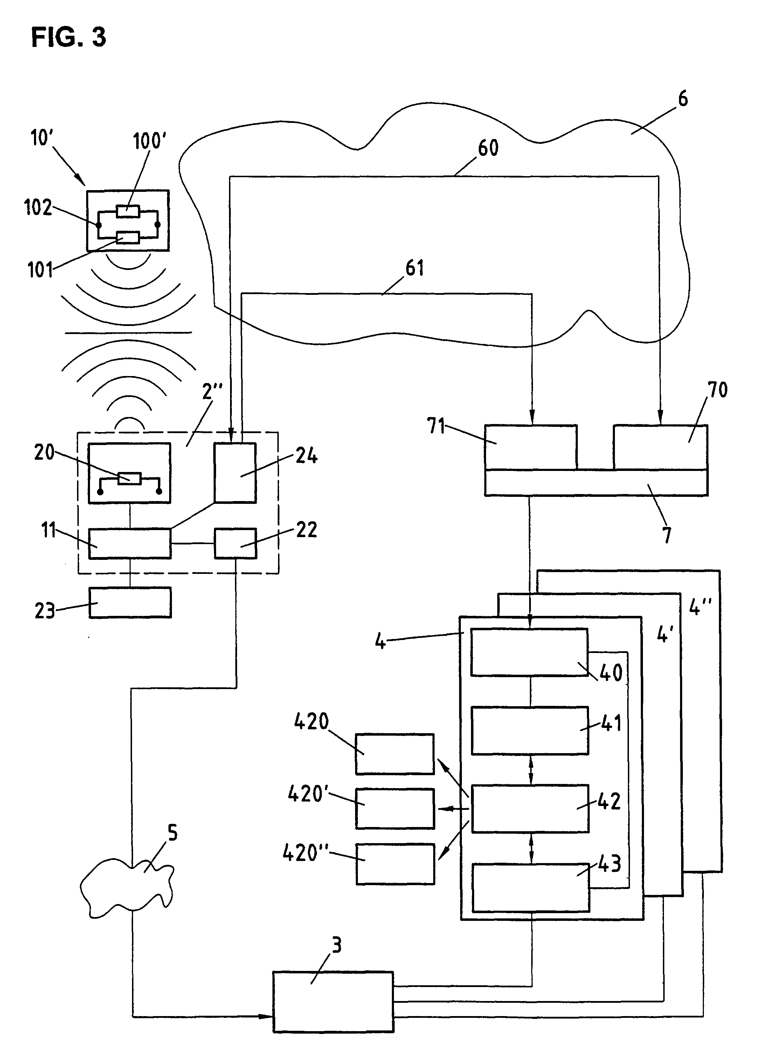

Die Figur 3 zeigt den Informationsfluss in einer dritten Ausführungsform der Erfindung. Der Kunde ist in dieser Variante nicht mit einem kompletten Mobilgerät ausgerüstet, sondern nur mit einem Transponder 10', der zum Beispiel in einer Chipkarte oder in irgendeinem Gerät, wie beispielsweise einer Uhr, einem Schlüsselring oder einem Fingerring, integriert werden kann. Der Transponder könnte auch in einer Fernsteuerung, zum Beispiel in einer infraroten Fernsteuerung, integriert sein und durch diese Fernsteuerung mit dem POT-Gerät 2" kommunizieren. Der Transponder 10' enthält einen ersten Prozessor 100', mit dem spezielle Kurzmeldungen, zum Beispiel SMS- oder USSD-Kurzmeldungen, gesendet, empfangen und verschlüsselt werden können. In einer bevorzugten Variante enthält der erste Prozessor 100' SICAP und/oder TTP-Module, mit dem Dateien und Programme durch SMS- oder USSD-Kurzmeldungen mit einem Server 7 ausgetauscht werden können. Der erste Prozessor 100' enthält aber keine Mobilfunk-Funktionen und der Transponder kann daher nicht als SIM-Karte in einem Mobilfunkgerät angewendet werden.

Ein zweiter Chip 101 (CCI, Contactfree Chipcard Interface) ist mit dem Chip 100' durch eine Schnittstelle 102 verbunden und ist für die kontaktlose Verbindung mit dem Gerät 2" zuständig. Es ist natürlich auch möglich, einen einzigen Chip zu benutzen, der beide Teilfunktionen erfüllt. Die kontaktlose Verbindung erfolgt in diesem Fall vorzugsweise mit mindestens einer induktiven Spule im Transponder 10'.

Das POT-Gerät 2" umfasst in diesem Fall einen Sender-Empfänger 20, um kontaktlos mit dem Transponder 10' zu kommunizieren, Datenverarbeitungsmittel 23 mit einer Tastatur 11 und einem Mobilfunkgerät 24, vorzugsweise ein reduziertes GSM-Gerät, das nur spezielle Kurzmeldungen, wie zum Beispiel SMS- oder USSD-Kurzmeldungen, empfangen und senden kann. Die Tastatur dient als Eingabemittel für den Kunden.

Das im POT-Gerät integrierte und auf die Übertragung von Kurzmeldungen reduzierte GSM-Gerät 24 ermöglicht die Übermittlung von Meldungen durch das Mobilfunknetz 6 zwischen dem Transponder 10' und einer ersten Anwendung im SIM-Server 7, und dadurch den verschlüsselten Nachlade- bzw. Checkup-Prozess (Pfeil 60) und den Belegetransfer (Pfeil 61) vom Kunden zu einer SIM-Server-Anwendung 71 im SIM-Server 7, beispielsweise in einem SICAP-Server. In einer Variante können der verschlüsselte Nachlade- bzw. Checkup-Prozess und der Belegtransfer auch über ein Modem oder einen ISDN-Anschluss 22 und ein Fixnetz 5 erfolgen.

Die Meldungen und Belege werden dann über die kontaktlose Schnittstelle 101/20 und über die Mobilfunkstrecke 60, 61 durch das Mobilfunknetz 6 übertragen.

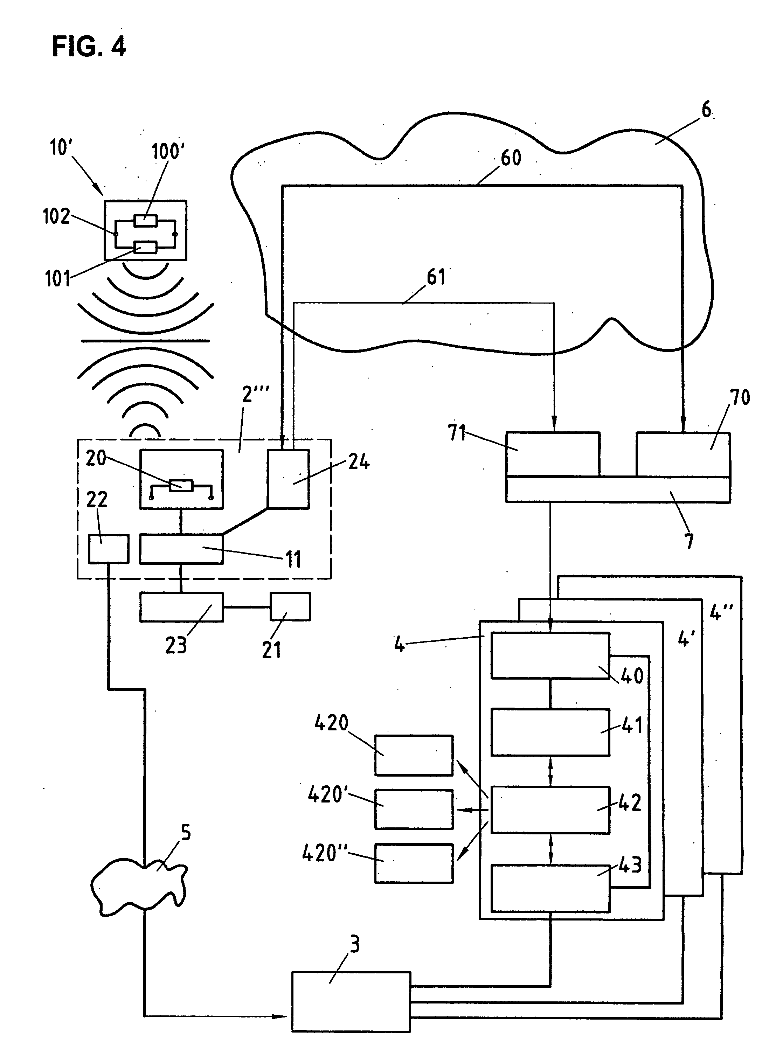

Die Figur 4 zeigt den Informationsfluss in einer vierten Ausführungsform der Erfindung. Der Kunde ist, wie in der dritten Variante, nicht mit einem kompletten Mobilgerät ausgerüstet, sondern nur mit einem Transponder 10'. Das POT-Gerät 2''' ist, wie bei der zweiten Ausführungsform, mit Datenverarbeitungsmitteln 23 verbunden, die über ein Flexmart-Modul 21 verfügen. Der Kunde kommuniziert mit dem SIM-Server 7 durch ein eingeschränktes Mobilfunkgerät 24, zum Beispiel ein auf die Übertragung von speziellen SMSoder USSD-Kurzmeldungen reduziertes GSM-Gerät 24 im Gerät 2'''. Die anderen Funktionen sind analog wie in der dritten Ausführungsform.

Mit dem Flexmartmodul 21 können Auftragsmeldungen in einem standardisierten Format für einen Produkt- oder Informations-Lieferanten vorbereitet werden, wie in der Patentanmeldung PCT/CH96/00464 beschrieben.

Ein Zahlungstransaktionsverfahren wird jetzt mit Hilfe der Figur 5 näher beschrieben. Dieses Verfahren kann auf beliebige Ausführungsformen der Erfindung gemäss den Figuren 1 bis 4 angesetzt werden. Dieser Ablauf ist jedoch allgemein gültig und nicht auf GSM-Prozesse beschränkt.

Die erste Kolonne in Figur 5 zeigt die Verfahrensschritte, die hauptsächlich das Mobilsystem 1 des Kunden involvieren; die zweite beschreibt die Verfahrensschritte, die vom POT-Gerät 2 ausgeführt werden ; die dritte betrifft die Operationen vom Finanzserver 4 und die vierte die Effekte auf die verschiedenen Konten beim Finanzinstitut. Es muss aber bemerkt werden, dass viele Verfahrensschritte entweder mit dem Mobilsystem 1, zum Beispiel als Prozess innerhalb der SIM-Karte 10, oder im POT-Gerät 2 ausgeführt werden können. Zum Beispiel kann die Dateneingabe entweder mit dem POT oder mit dem Mobilsystem 1 erfolgen, wenn dieses eine Tastatur enthält, wie zum Beispiel ein GSM-Mobilgerät.

Dieses Verfahren setzt im Schritt 200 voraus, dass die Identifizierungskarte 10 des Kunden, hier eine Wertkarte, mit einem Geldbetrag (e-cash) geladen ist. Wertkarten sind an sich schon bekannt ; wir werden später in Bezug auf Figur 6 näher erläutern, wie der Geldbetrag nachgeladen werden kann. Ausserdem beschreibt die Patentanmeldung EP96810570.0 (EP-A-0 827 119) ein Verfahren, um SIM-Karten mit einem Geldbetrag nachzuladen.

Das Mobilsystem 1 bzw. 10 wird im Schritt 201 funktionsbereit geschaltet, zum Beispiel mit dem Einschalten des Mobilgerätes. Ebenso wird im Schritt 202 das POT-Gerät 2 aktiviert. Das POT-Gerät 2 ruft dann im Schritt 203 in einem Broadcastverfahren den nächsten, unbestimmten Kunden auf (Kartenpaging).

Wenn die Verbindung zwischen dem POT-Gerät und dem Mobilsystem 1, 10 hergestellt worden ist, übergibt im Schritt 204 das Mobilsystem dem POT-Gerät seine Identifizierung IDUI (International Debit User Identification) und die Bestätigung, dass er solvent ist. Ob die Solvenz ausreicht, kann in diesem Moment noch nicht entschieden werden.

Das POT-Gerät 2 enthält eine vorzugsweise vom Finanzserver 4 periodisch aktualisierte Schwarzliste über zu sperrende Kunden. Die vom Kunden übermittelte IDUI wird mit der Schwarzliste verglichen (Schritt 205). Wenn die vom Kunden übergebene IDUI in der Schwarzliste gefunden wird (Schritt 206), wird ein Blockierflag im Schritt 207 gesetzt. Wenn keine Übereinstimmung gefunden wird, können auf der Tastatur 11 des POT-Geräts 2 die transaktionspezifischen Daten, zum Beispiel ein zu bezahlender Debit-Betrag A, eingegeben werden (Schritt 208). In einer Variante kann der Betrag A auch auf der Tastatur des Mobilgeräts 1 eingegeben werden. Das POT-Gerät 2 verknüpft dann diese transaktionspezifischen Daten mit der Identifizierung des POT-Geräts 2 und der IDUI, und sendet diese Belastungsaufforderung dem Kunden (Schritt 209). Vorzugsweise wird ausserdem eine Referenzwährung, wie zum Beispiel SDR, Euro oder Dollar eingeschlossen.

Da die Kommunikation signiert wird, kann im Schritt 210 geprüft werden, ob die Belastungsaufforderung mit der IDUI korreliert. Wenn nicht, wird der Rückweisungsgrund am POT-Gerät 2 angezeigt (Schritt 223). Sonst wird im Schritt 211 ein Blockierflag geprüft. Ist es gesetzt, erfolgt ein Check-up mit dem Finanzserver 4 (Schritt 248). Ist er nicht gesetzt, erfolgt ein Area-Check-up (Schritt 213). Es können dadurch SIM-Karten je nach Benutzungs-Area gesperrt werden. Wenn der Area Check-up negativ ist, erfolgt ein Check-up mit dem Finanzserver 4 (Schritt 248); sonst wird ein Time-Out Check-up gemacht (Schritt 215). Es wird geprüft, ob die Validationszeit, während der Transaktionen ohne Checkup durchgeführt werden können, schon abgelaufen ist. Ist die Validationszeit abgelaufen (216), erfolgt ein Check-up mit dem Finanzserver (Schritt 248); sonst wird der Kunde im Schritt 217 aufgefordert, sein Benutzerpasswort am Mobilgerät 1 manuell einzugeben. Ist das eingegebene Passwort korrekt (Schritt 218), wird der Betrag A gegebenenfalls in die Einheitswährung (zum Beispiel SDR) umgerechnet (Schritt 219). Damit wird ein internationaler Einsatz des Konzepts ermöglicht. Sonst wird im Schritt 223 auf dem POT-Gerät 2 die Rückweisung mit Grundangabe angezeigt.

Das Mobilsystem 1, 10 prüft dann im Schritt 220, ob der zu belastende Betrag A mit dem auf der Karte geladenen Geldbetrag gedeckt ist (Solvenzprüfung). Wenn dies nicht der Fall ist, wird am Bildschirm des POT-Geräts dieser Rückweisungsgrund angezeigt (Schritt 223).

Wenn alle diese Prüfungen erfolgt sind, wird im Schritt 222 die Transaktion mit einem Transaktionszähler Tz gezählt, der inkrementiert wird. Dieser Zähler entspricht der Anzahl der mit der Karte 10 abgelaufenen Transaktionen. Im Schritt 224 werden dann der Debit-Betrag A, die POT-Gerät-ldentifizierung POSID und die Benutzeridentifizierung IDUI in einem Transaktionsbeleg verknüpft, welcher zusätzlich zertifiziert und optional verschlüsselt und eventuell noch komprimiert wird. Das ECC-Verfahren (Elliptic Curve Cryptosystem) kann beispielsweise für die Zertifizierung angewendet werden. Ein geeignetes Zertifizierungs- und Verschlüsselungsverfahren wird später als Beispiel näher erläutert.

Der belastete Betrag A wird dann im Schritt 225 auf dem Kartenkonto abgebucht, und der Transaktionsbeleg wird im Schritt 226 in einem Stack auf dem Identifizierungselement 10 abgelegt. Dieser Kartenstack beim Kunden kann nach Bedarf zwecks detaillierter Kontrolle vom Finanzserver abgerufen werden. Vorzugsweise kann der Kunde selber die im Stack gespeicherten Transaktionsbelege auf seinem Mobilgerät anzeigen.

Nach dem Schritt 224 wird der Transaktionsbeleg dem POT-Gerät 2 zur Abrechnung übergeben, und die Signatur wird vom POT-Gerät geprüft (Schritt 227). Optional wird im Schritt 228 ein Papierbeleg am POT für den Kunden ausgedruckt.

Im Schritt 229 wird dann im POT-Gerät 2 der Belastungsbeleg mit eventuell zusätzlichen POS-Daten verknüpft, und der Transaktionsbeleg wird vom POT-Gerät elektronisch signiert und optional komprimiert und chiffriert. Der auf diese Weise vorbereitete elektronische Transaktionsbeleg wird dann optional im Schritt 230 in einem Stack im POT-Gerät 2 abgelegt. Der Stack enthält Transaktionsbelege von verschiedenen Kunden. Die Transaktionsbelege werden dann individuell oder gruppiert während des Schritts 231 an die Clearingeinheit 3 übertragen. Die Übertragung kann entweder gleich nach der Transaktion erfolgen, oder es können in periodischen Zeitabständen (zum Beispiel jede Stunde oder jeden Tag) mehrere Transaktionsbelege aus dem Stack übertragen werden. Ein Batch-Prozess, um alle Transaktionsbelege zum Beispiel in der Nacht zu übertragen, kann auch angewendet werden.

Die Clearingeinheit 3 empfängt individuelle oder gruppierte Transaktionsbelege aus mehreren POT-Geräten 2 in derselben geographischen Zone (Schritt 234). Mehrere geographisch verteilte Clearingseinheiten können vorgesehen werden. Im Schritt 235 teilt die Clearingseinheit 3 die von verschiedenen POT-Geräten empfangenen Transaktionsbelege den entsprechenden Finanzinstituten oder Dienstanbietern zu, und leitet diese Transaktionsbelege entsprechend weiter.

Wenn die Transaktionsbelege chiffriert sind, müssen sie von der Clearingeinheit zuerst entschlüsselt werden, um einem Finanzserver 4, 4', 4" zugeteilt zu werden, und dann wieder von der Clearingseinheit chiffriert, um sie weiterzuleiten. In einer bevorzugten Variante werden jedoch die Datenelemente in den Feldern IDUI und eventuell POSID des Transaktionsbeleges, die für das Clearing benötigt sind, vom POT-Gerät 2 nicht chiffriert. Dadurch kann eine gesicherte, end-to-end verschlüsselte Übertragung der Transaktionsbelege zwischen den POT-Geräten und den Finanzserver 4, 4', 4" erreicht werden.

Der zuständige Finanzserver empfängt im Schritt 236 die Transaktionsbelege, und der TTP-Server 40 dekomprimiert und entschlüsselt sie (falls benötigt), und überprüft die Echtheit der Signaturen vom POT-Gerät und vom Kunden. Im Schritt 237 wird geprüft, ob die POSID und/oder die IDUI sich in einer Revocation List befinden. Ist der Test negativ (238), weil weder die POT-Gerät-Identifizierung noch die Kundenidentifizierung IDUI sich auf der Revocation List befinden, erfolgt im Schritt 239 ein Test des Ladetokens LT. Der Ladetoken LT gibt die Anzahl der Nachladungen der Karte 10. Dieser Ladetoken wird im Finanzserver (LTₛ) und in der Karte (LT_{c}) nach jedem Nachladeprozess aktualisiert, wie später beschrieben. Eine Kopie des Ladetokens LT_{c} ist im Feld IDUI im Transaktionsbeleg übertragen. Der vom Mobilsystem 1,10 mitgeteilte Ladetoken LT_{c} muss gleich wie der im Finanzserver 4 gespeicherte Ladetoken LTₛ sein. Falls Nachladebelege noch auf dem Weg zwischen der Finanzserver 4 und dem Mobilsystem 1,10 sind, kann LT_{c} temporär auch kleiner sein als LTₛ. Der Finanzserver 4 prüft also ob LT_{c} ≤ LTₛ.

Wird im Schritt 240 diese Bedingung nicht verifiziert, wurde wahrscheinlich ein nicht autorisierter Nachladeprozess durchgeführt und das Verfahren geht zum Schritt 241 über. Es wird hier unterschieden, ob die Fälschung vom POT oder vom Kunden gemacht worden ist. Ist der Kunde verantwortlich, wird er im Schritt 242 in einer Blackliste eingetragen. Ein Kundensperrungsbeleg wird vorzugsweise generiert und an das Mobilsystem 1,10 des Kunden geschickt, um das Blockierflag zu setzen und dieses System zu sperren, sowie an alle POT-Geräte, oder zumindest an alle POT-Geräte im einem vordefinierten geographischen Bereich, um diesen Kunden in der Blackliste dieser POT einzutragen. Wurde dagegen das Problem vom POT-Gerät verursacht, wird dieses im Schritt 243 in einer POT-Blackliste eingetragen.

Wird im Schritt 240 die Ladetokenprüfung bestanden, kann im Schritt 244 der Betrag A im Transaktionsbeleg dem Kundenkonto 41 beim Finanzinstitut belastet werden. Andere Zahlungsvarianten, zum Beispiel mit einer Kreditkarte oder durch Erstellung einer Rechnung, sind natürlich im Rahmen dieser Erfindung auch möglich. Im Schritt 245 wird entsprechend der Betrag A einem Konto 420, 420' oder 420" des POT-Betreibers bei einem Finanzinstitut gutgeschrieben. Bearbeitungsgebühren können auch von einem Finanzinstitut und/oder vom POT-Betreiber oder vom Netzoperator dem POT-Konto 420 und/oder dem Kundenkonto 41 belastet werden.

Im Schritt 246 trägt dann der Finanzserver 4 diese Transaktion in den Transaktionszähler ein. Ein Prozess erfolgt dann im Schritt 247, um die Werte vom Ladetoken LT und vom Transaktionszähler Tz im Mobilsystem zu aktualisieren

Wir kommen auf den Prozess im Mobilsystem 1, 10 zurück. Wie schon erklärt, gelangt dieses System zum Schritt 248, wenn ein Sicherheitsproblem im Schritt 212, 214 oder 216 festgestellt wird. In diesem Fall erfolgt ein kompletter Checkup mit dem Finanzserver, vorzugsweise über das Mobilfunksystem 6. Der Checkup umfasst zum Beispiel einen Test und eine Erneuerung des Authentifizierungszertifikats sowie eine Überprüfung von allen ausgeführten Parametern, zum Beispiel der Ladetoken LT, der Transaktionzähler Tz, der Blackliste, usw. Ist das Ergebnis des Checkups negativ, wird das Blockierflag gesetzt, so dass das Mobilsystem 1, oder mindestens die betreffende Anwendung in der SIM-Karte 10, gesperrt wird (Schritt 253). Zeigt im Gegenteil diese Prüfung, dass höchstwahrscheinlich keine Fälschung versucht wurde, wird im Schritt 250 die Validationszeit neu gesetzt. Mit der Validationszeit kann zum Beispiel das Mobilsystem gesperrt werden, wenn es während einer vordefinierten Zeit, zum Beispiel ein Jahr, nicht benutzt wird. Diese Angabe muss daher nach jeder Benutzung neu eingestellt werden. Der Blockierflag wird dann im Schritt 251 gelöscht, und eine neue Area im Schritt 252 gesetzt.

Wichtig zu bemerken ist, dass der Belastungsprozess mit unterschiedlichen Währungen erfolgen kann, zum Beispiel auf der Basis der im Telekommunikationsbereich üblichen SDR (Sonderziehungsrechte) oder mit einer anderen Referenzwährung (zum Beispiel Euro oder Dollar). Der maximale Betrag auf der Karte ist je nach Kundenklasse definiert. Minimal ist ein Defaultwert in SDR möglich. Jedes Gerät 2 speichert den für ihn relevanten SDR-Wert (währungsspezifisch), der ihm im Einbuchungsprozess vom Server mitgeteilt wird. Je nach Kursschwankungen werden die POT-Geräte vom Finanzserver automatisch mit aktuellen Kursen versorgt.

Ein Verfahren zum Nachladen des Mobilsystems 1, 10 mit einem Geldbetrag wird jetzt mit Hilfe der Figur 6 näher beschrieben. Dieses Verfahren kann ebenfalls auf beliebige Ausführungsformen der Erfindung gemäss den Figuren 1 bis 4 angesetzt werden.

Ein Nachladeprozess erfolgt mit dem Mobilsystem 1,10 des Kunden und dem POT-Gerät 2 zusammen. Ein direkter Nachladeprozess vom Finanzserver 4 könnte aber auch angesetzt werden. Je nach Kundenklasse, oder auch nach Bedarf, kann vom Finanzserver der Beleg-Kartenstack beim Kunden, zwecks detaillierter Kontrolle, abgerufen werden. Nach dem Nachladeprozess kann der Stack vom Finanzserver gelöscht werden.

Die erste Kolonne in Figur 6 zeigt die Verfahrensschritte, die hauptsächlich das Mobilsystem 1,10 involvieren ; die zweite beschreibt die Verfahrensschritte, die vom POT-Gerät 2 ausgeführt werden ; die dritte betrifft die Operationen vom Finanzserver 4 und die vierte die Effekte auf die verschiedenen Konten beim Finanzinstitut. Es muss aber bemerkt werden, dass viele Verfahrensschritte entweder mit dem Mobilsystem 1, 10, zum Beispiel innerhalb der SIM-Karte 10, oder mit dem POT-Gerät 2 ausgeführt werden können. Zum Beispiel können die Verfahrensschritte, welche die Dateneingabe betreffen, entweder auf dem POT-Gerät oder auf dem Mobilgerät 1 ausgeführt werden, wenn das Mobilgerät eine Tastatur enthält, wie zum Beispiel ein GSM-Mobilgerät. Wenn das Mobilgerät 1 und das POT-Gerät 2 nicht drahtverbunden sind, wird die Kommunikation zwischen den beiden Teilen vorzugsweise verschlüsselt, zum Beispiel mit einem DEA-, DES-, TDES-, RSA- oder ECC-Sicherheitsalgorithmus.

Im Schritt 300 wird zuerst das Mobilsystem 1,10, zum Beispiel die Identifizierungskarte 10, operativ für den Nachladeprozess freigeschaltet ; das POT-Gerät 2 wird seinerseits auch im Schritt 301 aktiviert. Das POT-Gerät 2 ruft dann im Schritt 302 in einem Broadcastverfahren das nächste, unbestimmte Mobilsystem 1,10 auf (« Kartenpaging »).

Wenn die Verbindung zwischen dem POT-Gerät 2 und dem Mobilsystem 1,10 hergestellt worden ist, übergibt im Schritt 303 der Kunde dem POT seine Identifizierung IDUI (International Debit User Identification) und den Typ des zu startenden Prozesses, hier eine Nachladung.

Das POT-Gerät 2 enthält eine vorzugsweise vom Finanzserver 4 periodisch aktualisierte Schwarzliste über zu sperrende Mobilsysteme (Revocation list). Die vom Kunden übermittelte IDUI wird mit der Schwarzliste verglichen (Schritt 304). Wenn die vom Kunden übergebene IDUI in der Schwarzliste gefunden wird (Schritt 305), wird ein Blockierflag im Schritt 306 gesetzt. Danach, oder wenn keine Übereinstimmung gefunden wird, wird im Schritt 307 geprüft, ob die Aufforderung mit der IDUI korreliert. Wenn nicht, wird der Rückweisungsgrund am POT-Gerät 2 angezeigt (Schritt 315). Sonst wird im Schritt 308 das Blockierflag geprüft. Ist es gesetzt, wird das Mobilsystem 1, oder mindestens die betreffende Anwendung in der Identifizierungskarte 10, gesperrt (Schritt 331). Ist es nicht gesetzt, wird der Kunde im Schritt 310 aufgefordert, sein Benutzerpasswort am Mobilgerät 1 manuell einzugeben. Ist das eingegebene Passwort nicht korrekt (Schritt 311), wird ebenfalls das Blockierflag gesetzt und der Rückweisungsgrund am POT-Gerät 2 angezeigt (Schritt 315); sonst ist der Prozess frei für die Nachladung und der Kunde wird im Schritt 312 aufgefordert, die transaktionspezifischen Daten, hier ein Nachladebetrag A, einzugeben. In der dargestellten Variante kann der Nachladebetrag am POT-Gerät eingegeben werden ; dieser Betrag wird im Schritt 313 mit der POSID und mit der IDUI verknüpft, signiert und an die Karte 10 übermittelt. Der Betrag A könnte aber auch am Mobilgerät 1 erfasst werden ; in diesem Fall ist kein POT involviert, und die POSID wird daher nicht benötigt.

Im Schritt 314 wird geprüft, ob die IDUI in den vom POT-Gerät 2 empfangenen Daten mit der eigenen IDUI übereinstimmt. Wenn nicht, wird der Rückweisungsgrund am POT-Gerät 2 angezeigt (Schritt 315); sonst wird der gewünschte und am POT-Gerät eingegebene Nachladebetrag auf dem Bildschirm des Mobilgeräts angezeigt. Im Schritt 316 werden dann die POSID, die IDUI, die schon erwähnte Anzahl Zahlungstransaktionen Tz, die auf der Karte gespeicherte Anzahl ausgeführter Nachladeprozesse (LTc, Lade-Token Kunden) und der Restbetrag auf der Karte DRA (Debit Rest Amount) verknüpft, signiert, verschlüsselt und dann optional komprimiert. Es entsteht dadurch ein Nachladebeleg. Optional kann auch der Beleg-Stack auf der Karte übermittelt werden, zum Beispiel je nach Kundenklasse, bei Kartenausgabe oder nach Bedarf während der Nutzung bei Solvenzproblemen. Die POSID wird nur in den Nachladebeleg integriert, wenn der Kunde über ein Mobilgerät ohne den POT-Eingabeteil verfügt, damit er vom Finanzserver auch adressiert werden kann. Der Nachladebeleg wird dann an den Finanzserver 4, 4', bzw. 4" übermittelt, wo der TTP-Server 40 diesen Beleg im Schritt 317 empfängt, gegebenenfalls entschlüsselt und dekomprimiert, und die Signatur vom Kunden und gegebenenfalls vom POT überprüft.

Im Schritt 319 werden mit Hilfe der Tabelle 318, welche die Anzahl und Token bezüglich der Prozesse zwischen dem Kunden und dem Finanzserver speichert, folgende Prüfungen durchgeführt:

Beträgeprüfung : Die Summe ΣA aller auf der Karte geladenen Beträge, inklusive der Startsumme, muss gleich oder kleiner sein als die Summe aller Kontrollbelastungen ΣKB und des Restbetrags DRA auf der Karte. Die Summe kann kleiner sein, weil die Belege, die noch zwischen dem Mobilsystem 1,10, der Clearingeinheit 3 und dem Finanzserver 4, 4', 4" sind, in diesem Moment noch nicht erfasst werden können.

Ladetoken-Prüfung : Die Anzahl von Lade- bzw. Nachlade-Transaktionen wird im Mobilsystem, zum Beispiel in der SIM-Karte mit einem Token LTc und im Finanzserver 4 mit einem anderen Token LTs gezählt. Diese beide Token müssen gleich sein.

Transaktionszählerprüfung : Für jede Zahlungstransaktion wird der Transaktionszähler Tz im Mobilsystem 1,10 inkrementiert ; in jedem Nachladebeleg wird auch Tz übertragen. Der beim Finanzserver gespeicherte Transaktionszähler T_{zs}, der durch die vom Kunden transferierten Belege inkrementiert wird, muss gleich oder eventuell kleiner sein als der Transaktionszähler Tz im Mobilsystem 1,10.

Wenn eine von diesen drei Bedingungen nicht erfüllt ist (Schritt 320), wird der Blockierflag im Schritt 321 gesetzt und der Nachladeprozess im Schritt 325 zurückgewiesen. Sonst wird im Schritt 322 der Kontostand 41 des Kunden überprüft. Reicht er nicht für die Nachladung, wird im Schritt 325 ebenfalls die Rückweisung aufbereitet.

Wenn das Konto (oder die Kontolimite) des Kunden beim Finanzinstitut 4 für den nachzuladenden Betrag reicht (Schritt 322, 323), wird dieser Betrag vom Kundenkonto 41 abgehoben (324), inklusive allfälliger Kommissionen. Ein Nachladebeleg wird dann im Schritt 326 aus der POSID, der IDUI, dem Betrag A, dem neuen Lade-Token LTn, und einem vordefinierten Time Out Inkrement TOi erstellt. Dieser Nachladebeleg wird im Schritt 327 signiert, optional verschlüsselt und komprimiert, und an das Mobilsystem 1,10 des Kunden übertragen. Dieses prüft während dem Schritt 328, ob die Signatur im Beleg vom Finanzserver stammt, und verifiziert während dem Schritt 330, ob das Blockierflag gesetzt ist. Falls es gesetzt ist (Schritt 330), wird das Mobilsystem 1, oder mindestens die betreffende Anwendung, im Schritt 331 gesperrt. Sonst wird noch geprüft, ob der Finanzserver eine Rückweisung aufgefordert hat (Schritt 332), was zur Unterbrechung des Prozesses mit Anzeige des Rückweisungsgrundes führt (Schritt 334).

Wenn alle Tests erfolgreich bestanden sind, wird im Schritt 335 das Kartenkonto mit dem geforderten Nachladebetrag gebucht. Der alte Ladetoken LTc wird dann mit dem vom Finanzserver übermittelten neuen Ladetoken LTn ersetzt (Schritt 336), der Transaktionszähler Tz auf der Karte wird im nächsten Schritt 337 zurückgesetzt, und der Time Out TOi im Schritt 338 neu gesetzt. Wenn im Schritt 339 festgestellt wird, dass im Nachladebeleg das POSID enthalten ist, wird ausserdem im Schritt 340 eine neue Area gesetzt.

Der Nachladebetrag wird dann als Bestätigung angezeigt, entweder am Bildschirm des Mobilgeräts oder am POT-Gerät (Schritt 341). Schliesslich wird auch noch der Gesamtkontostand auf der Karte angezeigt (Schritt 342).

Die Sicherung der Datenübermittlungen durch Kryptographie wird in zwei verschiedenen Segmenten unterschiedlich unternommen. Zwischen dem Kunden und dem POT wird die Kommunikation durch die Luftschnittstelle durch zum Beispiel einen Algorithmus wie DES, TDES, RSA oder ECC sichergestellt. Zwischen Kunden und Finanzserver kommt dagegen das TTP (Trusted Third Party)- Verfahren, oder optional ein PTP-Verfahren (Point-to-Point) zur Anwendung. Die nötigen Elemente sind auf das Identifizierungselement 10 und im TTP-Server 40 integriert. Eine Beschreibung des TTP-Konzeptes wird als Anhang beigelegt.

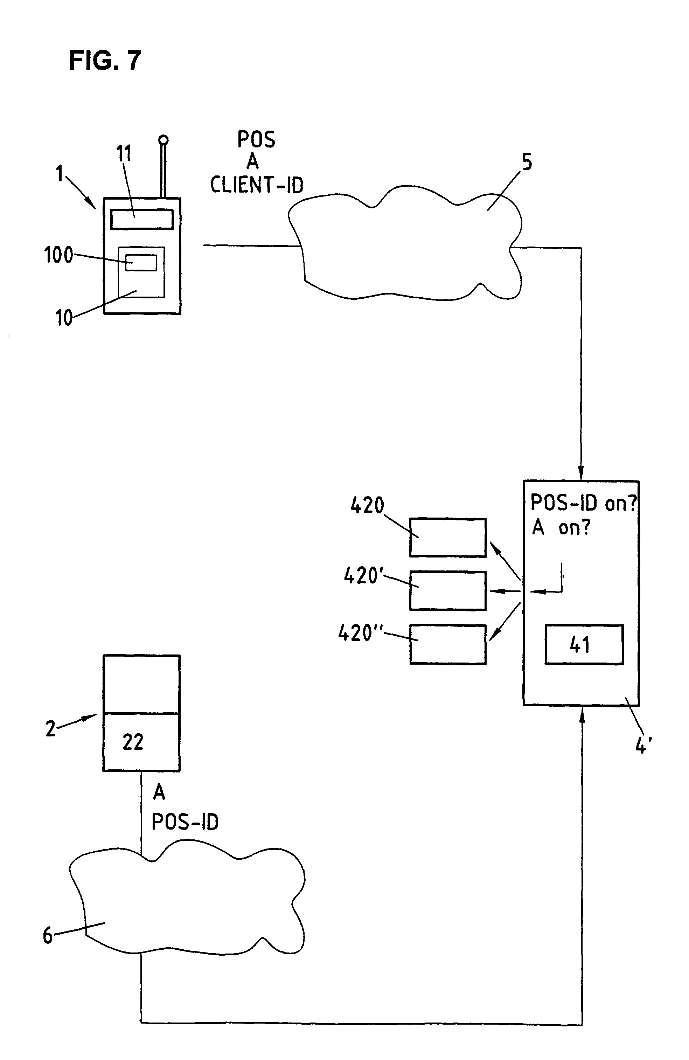

In der Folge wird mit Hilfe der Figur 7 der Informationsfluss in einer weiteren möglichen Ausführungsform des Transaktionsverfahrens erläutert. Der Kunde ist mit einem Mobilgerät 1 ausgerüstet, das ebenfalls eine SIM-Karte 10 enthält, die ihn im GSM-Netz 5 identifiziert. Der Verkäufer braucht ein POT-Gerät 2 mit einem Modem-Anschluss 22 an einem Telekommunikationsnetz 6, zum Beispiel ein Fixnetz. Beide haben einen Vertrag mit dem Betreiber des Finanzservers 4', zum Beispiel einem Finanzinstitut.

Damit die Transaktion zwischen Kunden und Verkäufer erfolgt, muss der Verkäufer zuerst den zu bezahlenden Betrag A in den POT 2 eintippen. Das POT-Gerät verknüpft diesen Betrag A mit einem im POT gespeicherten POSID, das die Filiale und die Kasse in dieser Filiale identifiziert. Diese verknüpften Daten werden durch das vorzugsweise gesicherte Datennetz 6 an den Finanzserver 4' übermittelt.

Der Kunde bereitet auf seinem Gerät 1 eine spezielle Kurzmeldung vor, vorzugsweise eine SMS-Kurzmeldung oder eventuell eine USSD-Datei, die den zu zahlenden Betrag A und das vom Verkäufer mündlich kommunizierte POSID enthält, und sendet diese Kurzmeldung über das GSM-Netz 5 und die nicht dargestellte Kurzmeldungsbetriebszentrale (SMSC) an den Finanzserver 4'. Diese Kurzmeldung enthält automatisch die in der SIM-Karte gespeicherte Kundenidentifikation. Vorzugsweise ist ausserdem ein verlangter Sicherheits-PIN-Code enthalten. Die Kurzmeldung kann vor der Übermittlung verschlüsselt werden.

Vorzugsweise werden keine Angaben über den gekauften Dienst, das Produkt oder die Information übermittelt, um die Privatsphäre des Käufers zu schützen.

Der Finanzserver 4' erhält die Daten vom POT-Gerät 2 und vom Mobilsystem 1 des Kunden und ergänzt sie, falls notwendig. Er kennt vom POT die Identität POSID und den Betrag A. Daher kann er das gutzuschreibende POT-Konto 420, 420', 420" bestimmen. Vom Kunden kennt er die Identität durch Kundenidentifizierung und gegebenenfalls die PIN und den Betrag. Daher kann er das zu belastende Kundenkonto 41 bestimmen. Der Finanzserver 4' vergleicht dann das vom POT-Gerät 2 und vom Mobilsystem übermittelte POSID sowie den Betrag. Bei Übereinstimmung erfolgt die Transaktion zwischen POT-Konto und Kundenkonto. Der Finanzserver 4' schickt dann eine Meldung an das POT-Gerät 2 und/oder an das Mobilgerät 1, dass die Transaktion erfolgt ist, und diese Meldung wird angezeigt. Bei Unstimmigkeiten wird der Vorgang abgebrochen.

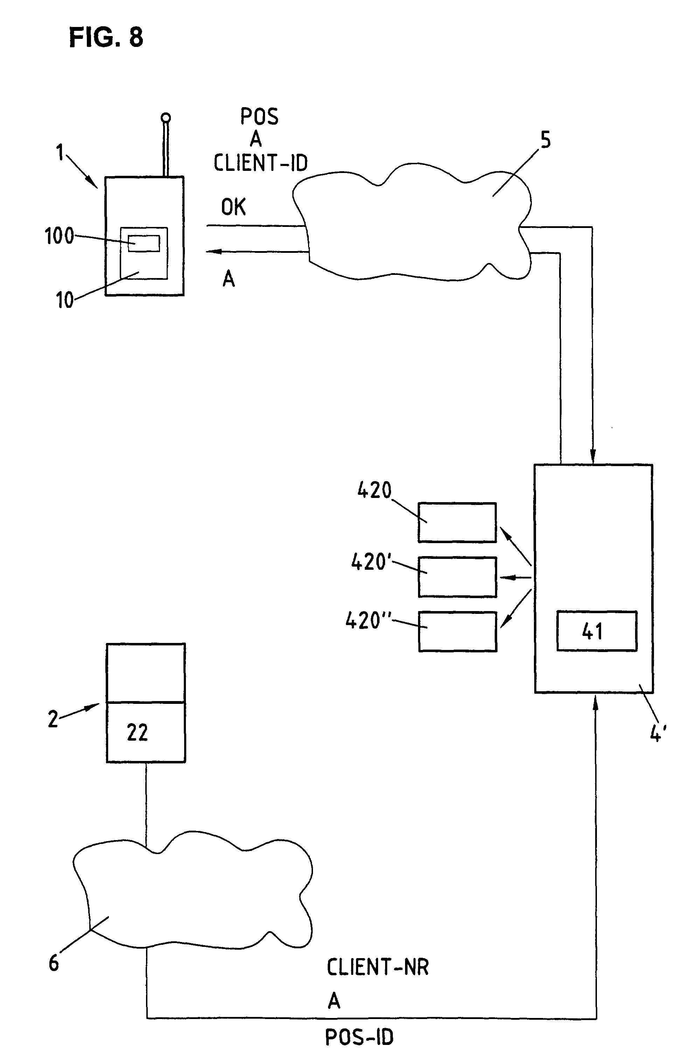

In der Folge wird mit Hilfe der Figur 8 der Informationsfluss in einer weiteren möglichen Ausführungsform des Transaktionsverfahrens erläutert. Der Kunde ist mit einem Mobilgerät 1 ausgerüstet, das ebenfalls eine SIM-Karte 10 enthält, die ihn im Mobilfunknetz 5 identifiziert. Der Verkäufer braucht ein POT-Gerät 2 mit einem Modem-Anschluss 22 an einem Telekommunikationsnetz 6, zum Beispiel ein Fixnetz. Beide haben einen Vertrag mit dem Betreiber des Finanzservers 4', zum Beispiel ein Finanzinstitut.

Damit die Transaktion zwischen Kunden und Verkäufer erfolgt, muss der Betreiber des POT-Geräts, zum Beispiel ein Verkäufer, den zu bezahlenden Betrag A und die Mobilrufnummer vom Kunden auf dem POT-Gerät 2 erfassen. Das POT-Gerät verknüpft diese Angaben mit einem im POT gespeicherten POSID, das die Filiale und die Kasse in dieser Filiale identifiziert. Diese verknüpften Daten werden durch das vorzugsweise gesicherte Datennetz 6 an den Finanzserver 4' übermittelt. Vorzugsweise werden keine Angaben über das gekaufte Produkt übermittelt, um die Privatsphäre des Käufers zu gewährleisten.

Der Finanzserver 4' erhält die Daten vom POT und ergänzt sie, falls notwendig. Er kennt die Identität POSID des POT und den Betrag A. Daher kann er das gutzuschreibende POT-Konto 420, 420', 420" bestimmen. Ebenfalls kann er den Kunden durch die übermittelte Mobilrufnummer identifizieren, und kennt daher das zu belastende Kundenkonto 41.

Der Finanzserver 4' schickt dann dem Kunden eine spezielle Kurzmeldung, zum Beispiel eine SMS- oder USSD-Kurzmeldung, die den Betrag A enthält. Der Kunde muss dann die Transaktion mit einer Bestätigungs-Kurzmeldung bestätigen, die eine Identifizierung des Kunden im GSM-Netz enthält. Falls keine Bestätigung des Kunden kommt, oder wenn die übermittelte Identifizierung nicht mit der Kunden-Mobilrufnummer übereinstimmt, wird der Vorgang abgebrochen. Sonst erfolgt die Transaktion.

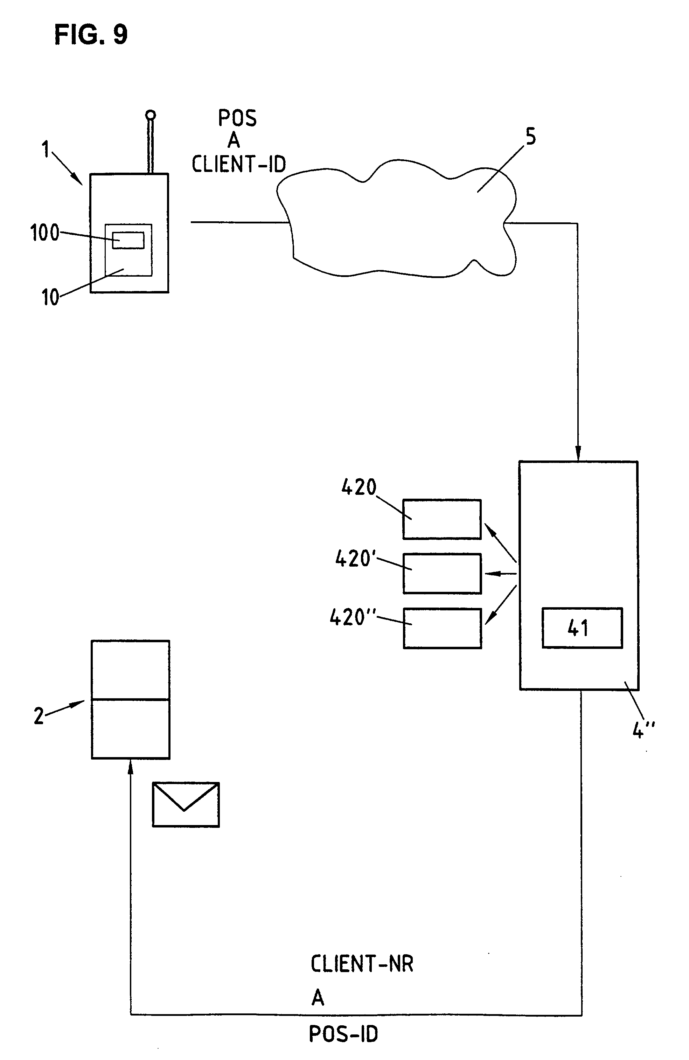

In der Folge wird mit Hilfe der Figur 9 der Informationsfluss in einer weiteren möglichen Ausführungsform des Transaktionsverfahrens erläutert. Der Kunde ist mit einem Mobilgerät 1 ausgerüstet, das ebenfalls eine SIM-Karte 10 enthält, die ihn im GSM-Netz 5 identifiziert. Der Verkäufer braucht ein normales POT-Gerät 2, das keinen Telekommunikationsanschluss benötigt. Beide haben einen Vertrag mit dem Betreiber des Finanzservers 4', zum Beispiel einem Finanzinstitut.

Damit die Transaktion zwischen Kunden und Verkäufer erfolgt, muss der Kunde eine spezielle Kurzmeldung, zum Beispiel eine SMS- oder USSD-Kurzmeldung, vorbereiten, die den zu zahlenden Betrag A und das vom Verkäufer kommunizierte POSID enthält, und diese Kurzmeldung über das GSM-Netz 5 und die SIM-Zentrale an den Finanzserver 4' senden. Diese Kurzmeldung enthält automatisch die in der SIM-Karte gespeicherte Kundenidentifikation. Vorzugsweise enthält sie ausserdem einen verlangten Sicherheits-PIN-Code. Vorzugsweise werden keine Angaben über das gekaufte Produkt übermittelt, um die Privatsphäre des Käufers zu schützen.

Der Finanzserver 4' erhält die Daten vom Kunden und ergänzt sie, falls notwendig. Er kennt die Identität POSID des POT-Geräts und den Betrag A. Daher kann er das gutzuschreibende POT-Konto 420 bestimmen. Ebenfalls kann er den Kunden durch die Kundenidentifizierung in der Kurzmeldung identifizieren, und kennt daher das zu belastende Kundenkonto.

Der Finanzserver 4' tätigt dann die Transaktion, und sendet dem POT-Betreiber eine Bestätigungsmitteilung in Form einer Kurzmeldung, eines e-mails oder eines normalen Postbriefes. Diese Mitteilung enthält mindestens die Identifizierung des POT, das Datum, die Zeit, den Betrag und eventuell das Kundenkonto.

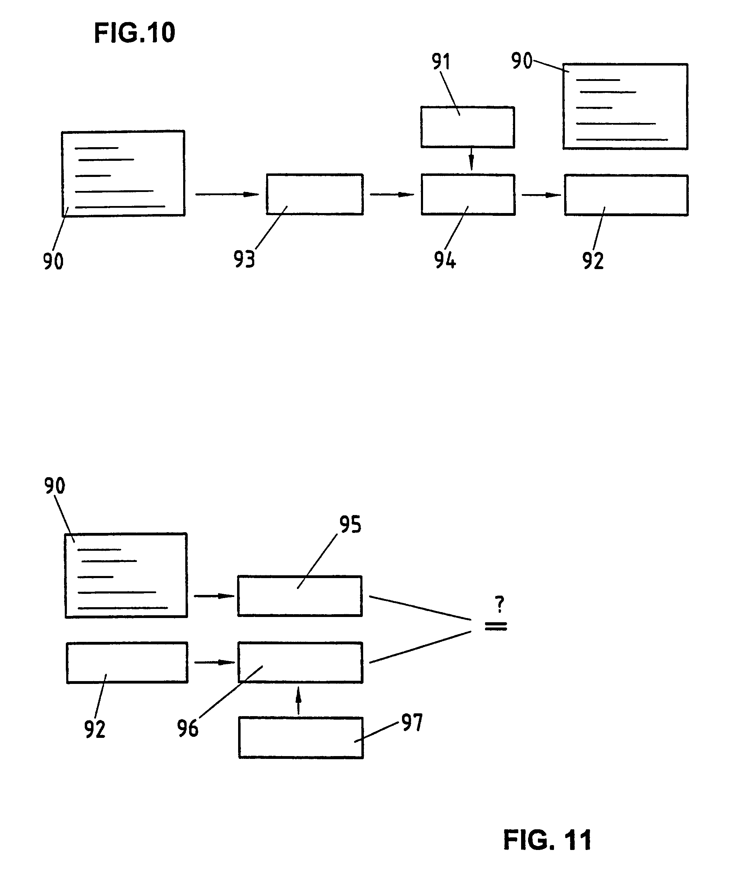

Vorzugsweise werden alle Belege zwischen Mobilgeräten, POT-Geräten und den Finanzservern als SMS- oder USSD-Meldungen übermittelt. Falls SMS-Kurzmeldungen benutzt werden, werden sie vorzugsweise mit einem speziellen Header im Datentelegramm versehen, um diese Meldungen von gewöhnlichen Meldungen zu unterscheiden. Vorzugsweise wird ausserdem der Inhalt dieser Meldungen mit dem im Anhang beschriebenen und durch die Figuren 10 bis 13 veranschaulichten TTP-Verfahren verschlüsselt.

Der Fachmann wird verstehen, dass die Erfindung auch für nicht finanzielle Transaktionen zwischen einem Mobilsystem und einem mit einem Telekommunikationsnetz 5 verbundenen POT-Gerät 2 geeignet ist. Das POT-Gerät 2 kann zum Beispiel auch durch eine Verschlussvorrichtung gebildet werden ; für diese Anwendung ist das Mobilsystem 10, zum Beispiel in der Form einer Chipkarte, mit einem elektronischen Schlüssel geladen; der Schlüssel wird aus dem Server 4 nachgeladen und auf der Karte 10 gespeichert. Um die Verschlussvorrichtung zu öffnen, wird eine kontaktlose Kommunikation, zum Beispiel durch eine induktive oder eventuell infrarote Schnittstelle, zwischen dem Mobilsystem 10 und dem POT-Gerät 2 aufgebaut. Die Verschlussvorrichtung wird nur dann geöffnet, wenn es sich nach dieser Kommunikation erweist, dass der im Mobilsystem 10 gespeicherte Schlüssel korrekt ist und seinem Besitzer das Eintrittsrecht in die geschützte Zone gibt. Der Server 4, mit dem die Verschlussvorrichtung durch das Netz 5 verbunden ist, verwaltet und registriert die Zutrittsgenehmigungen und belastet gegebenenfalls das Konto 41 des Kunden mit einem von den erfolgten Zutritten abhängigen Betrag.

### Anhang - Grundlagen der Kryptographie und TTPs

### Sicherheitsanforderungen

Beim Austausch von Daten zwischen dem Mobilsystem 1,10 und dem Finanzserver 4 unterscheidet man zwischen folgenden Anforderungen an die Sicherheit:
- Vertraulichkeit: Sicherstellung, dass eine Information nicht für Unbefugte zugänglich oder lesbar gemacht wird.
- Authentifikation: Prozess, in dem die Authentizität überprüft wird.
- Authentizität: Beweis einer Identität. Sie bewirkt die Gewissheit, dass der Kunde, das POT-Gerät 2 oder der Server 4 tatsächlich derjenige ist, für den er sich ausgibt.
- Authentizität einer Information: Gewissheit, dass der Absender/Hersteller einer Information (Mobilsystem 1,10, POT-Gerät oder Finanzserver) authentisch ist.
- Nichtabstreitbarkeit des Ursprungs / Herkunftsbeweis: Der Absender einer Information kann *nicht* abstreiten, dass die Information von ihm stammt.
- Integrität: Sicherstellung der Konsistenz der Information, d.h. Schutz vor Veränderung, Hinzufügung oder Löschung von Informationen.

Nachfolgend wird hier statt des Begriffes "Information" der Begriff "Meldung" verwendet. Eine Meldung ist eine Information (hier eine Bitfolge), die von einem Absender an einen Empfänger übermittelt wird. Für diese Applikation kann eine Meldung zum Beispiel ein Zahlungsbeleg oder ein Nachladebeleg sein. Die Begriffe "Absender" und "Empfänger" meinen, je nach Richtung der Meldung, entweder das Mobilsystem 1, 10, das POT-Gerät 2 oder den Finanzserver 4.

Die Authentizität des Absenders, Integrität der Information und Nichtabstreitbarkeit des Ursprungs der Information werden durch die Verwendung einer sog. Digitalen Signatur erreicht. Eine Digitale Signatur ist ein kryptographischer Code (d.h. eine Bitsequenz), der für eine bestimmte Information einzigartig ist, und für dessen Herstellung ein kryptographischer Schlüssel (ebenfalls eine Bitsequenz), den nur der Verfasser besitzt, benötigt wird. Die Digitale Signatur kann demnach nur vom Besitzer des privaten Schlüssels hergestellt werden. Sie wird normalerweise der Originalmeldung beigefügt.

Die Vertraulichkeit der Informationsübertragung wird durch Verschlüsselung erreicht. Sie besteht darin, dass die Meldung mit Hilfe eines Verschlüsselungsalgorithmus und eines kryptographischen Schlüssels (Bitsequenz) in einen unleserlichen Zustand verwandelt wird. Aus der auf diese Art verwandelten Meldung kann die Ursprungsinformation nicht zurückgewonnen werden, es sei denn, man kenne den zum Entschlüsseln notwendigen Schlüssel.

Wie das im Detail funktioniert, wird im folgenden dargelegt.

### Symmetrische und asymmetrische Verschlüsselung

Man unterscheidet zwei Arten von Verschlüsselungsalgorithmen:
- Symmetrisch: Zum Chiffrieren und Dechiffrieren (Chiffrieren = Verschlüsseln) einer Information wird derselbe kryptographische Schlüssel verwendet. Folglich müssen der Absender und der Empfänger im Besitz des gleichen Schlüssels sein. Ohne diesen Schlüssel ist es unmöglich, die Originalinformation wieder zurückzubekommen. Der heute am häufigsten verwendete symmetrische Algorithmus ist DES (Digital Encryption Standard). Andere Algorithmen sind z.B. IDEA, RC2 und RC4. Symmetrische Algorithmen werden vorzugsweise für die Sicherung der Datenübertragungen zwischen Mobilsystem und POT-Gerät eingesetzt. Der Schlüssel wird dann im POT-Gerät 2 und im Mobilsystem 10 gespeichert.
- Asymmetrisch: Zum Chiffrieren und Dechiffrieren werden zwei verschiedene, komplementäre Schlüssel verwendet (Schlüsselpaar); das heisst, die Meldung wird mit einem ersten Schlüssel chiffriert und mit einem zweiten Schlüssel dechiffriert. Diese Prozedur ist umkehrbar, d.h., es kann auch der zweite Schlüssel zum Chiffrieren und der erste Schlüssel zum Dechiffrieren benützt werden. Es ist unmöglich, aufgrund des ersten Schlüssels den zweiten Schlüssel zu rekonstruieren (oder umgekehrt). Ebenso ist es unmöglich, aufgrund der chiffrierten Information den Schlüssel zu berechnen (dies ist sogar dann gültig, wenn die Originalinformation bekannt ist). Der heute mit Abstand am häufigsten verwendete asymmetrische Algorithmus ist RSA (benannt nach dessen Erfindern Rivest, Shamir und Adleman). Eine Variante davon ist DSS (Digital Signature Standard).

Mit Hilfe der asymmetrischen Chiffrierung kann eine sogenannte Digitale Signatur hergestellt werden. Wie das im Detail funktioniert, wird im folgenden erklärt.

### Private und öffentliche Schlüssel

Mit Hilfe der asymmetrischen Verschlüsselungstechnik kann ein sogenanntes System von öffentlichen und privaten Schlüsseln realisiert werden. Dabei wird der eine Schlüssel des komplementären Schlüsselpaares als privat bezeichnet. Er ist im Besitz des Absenders, zum Beispiel des Kunden, und ist nur ihm bekannt. Er wird deshalb auch geheimer Schlüssel genannt (wobei dieser Begriff normalerweise für symmetrische Schlüssel verwendet wird). Der andere Schlüssel ist der öffentliche Schlüssel. Er ist allgemein zugänglich. Wie oben erwähnt, ist es nicht möglich, aufgrund des öffentlichen Schlüssels den privaten Schlüssel zu berechnen. Jedes Mobilsystem, POT-Gerät und jeder Finanzserver erhält von einer vertrauenswürdigen Instanz ein Schlüsselpaar bestehend aus einem privaten und einem öffentlichen Schlüssel.

Es ist von eminenter Wichtigkeit, dass der private Schlüssel auch wirklich geheim bleibt, d.h., dass keine andere Person ihn kennt, weil darauf die Sicherheit der Digitalen Signatur aufbaut. Darum wird der private Schlüssel nur in verschlüsselter Form auf der Identifizierungskarte 10 gespeichert, auf der ausserdem der Chiffrieralgorithmus direkt implementiert ist. Auf diese Weise bleibt der private Schlüssel immer im Chip und verlässt diesen in keinem Moment. Die zu verschlüsselnden Daten werden in den Chip transferiert, dort werden sie verschlüsselt und anschliessend wieder zurückgesendet. Die Architektur des Chips ist so definiert, dass der private Schlüssel weder mit elektronischen, noch mit optischen, mechanischen, chemischen oder elektromagnetischen Mitteln gelesen werden kann.

Im Gegensatz zum privaten Schlüssel ist der öffentliche Schlüssel allgemein bekannt und wird an alle Benützer verteilt. Der Einfachheit halber wird der öffentliche Schlüssel in der Regel mit jeder Meldung mitgeschickt. Wie wir weiter unten sehen werden, braucht es dabei eine vertrauenswürdige Instanz (Zertifizierungsinstanz), die für die Echtheit der öffentlichen Schlüssel bürgt, da ein Krimineller sein eigenes Schlüsselpaar herstellen und sich als jemand anderen ausgeben kann. Diese Echtheitsgarantie geschieht in Form eines sogenannten Zertifikates, was im folgenden genauer beschrieben wird.

### Die Hashfunktion

Die Hashfunktion ist ein nicht-reziproker Algorithmus, der aufgrund einer bestimmten Information beliebiger Länge einen Hashwert (Kurzfassung/Komprimat) fixer Länge herstellt. Er ist mit der Quersumme einer ganzen Zahl vergleichbar. Dabei ist die Länge der Meldung typischerweise um einiges grösser als der daraus berechnete Hashwert. So kann die Meldung z.B. mehrere Megabytes umfassen, wogegen der Hashwert nur 128 Bits lang ist. Es ist zu beachten, dass aufgrund des Hashwertes nicht auf die Originalinformation zurückgeschlossen werden kann (Nichtreziprokität), und dass es extrem schwierig ist, die Information so zu modifizieren, dass sie den gleichen Hashwert ergibt. Zweck einer solchen Funktion ist die Herstellung eines kurzen, für das jeweilige Dokument einzigartigen, Codes. Dieser wird für die Herstellung der Digitalen Signatur benützt. Beispiele von Hashalgorithmen sind MD4 (Message Dienst 4), MD5, RIPE-MD und SHA (Secure Hash Algorithm).

### Die Digitale (Elektronische) Signatur

Dieses Verfahren wird mit Hilfe der Figur 10 beschrieben. Jeder Benützer erhält einen privaten und einen öffentlichen Schlüssel. Um eine Meldung 90 digital zu signieren, wird sie mit dem privaten Schlüssel des Absenders chiffriert (Block 94). Das Resultat ist die Digitale Signatur 92. Da aber die so entstandene Signatur die gleiche Grösse wie die Originalmeldung aufweisen würde, wird zuerst der Hashwert 93 der Meldung 90 berechnet. Wie oben erwähnt, hat der Hashwert eine fixe Länge und ist für eine bestimmte Meldung einzigartig. Für die Bildung der digitalen Signatur wird nun statt der Originalmeldung der Hashwert 93 chiffriert. Die so entstandene Digitale Signatur 92 wird dem Originaldokument 90 beigefügt. Das Ganze wird dann an den Empfänger verschickt (Figur 10).

Da nur der Absender des Dokumentes im Besitz seines privaten Schlüssels 91 ist, kann nur er die Digitale Signatur herstellen. Hier liegt denn auch die Analogie zu einer handschriftlichen Unterschrift. Die Digitale Signatur besitzt aber gewisse Eigenschaften, die bei der handschriftlichen Unterschrift nicht vorhanden sind. So kann z.B. bei einem handschriftlich unterschriebenen Vertrag nicht ausgeschlossen werden, dass keine Information unbemerkt hinzugefügt oder gelöscht wurde, was bei der Digitalen Signatur nicht möglich ist. Die Digitale Signatur bietet also sogar eine noch bessere Sicherheit als die traditionelle handschriftliche Unterschrift.

### Überprüfung der Digitalen Signatur

Da der öffentliche Schlüssel 97 an alle Benützer verteilt wird und somit allgemein bekannt ist, kann jeder Empfänger die Digitale Signatur 92 überprüfen. Dazu dechiffriert er die Digitale Signatur 92 mit dem öffentlichen Schlüssel 97 des Absenders (Block 96 auf Figur 11). Das Resultat ist der Hashwert der Originalmeldung 90. Parallel dazu berechnet der Empfänger den Hashwert 95 des Originaldokuments 90, das ja ebenfalls (zusammen mit der Signatur 92) an ihn übermittelt wurde. Diesen resultierenden zweiten Hashwert 95 vergleicht der Empfänger nun mit dem aus der Signatur dechiffrierten Hashwert 96. Stimmen die beiden Hashwerte miteinander überein, so ist die Digitale Signatur authentisch.

Wenn nun die Originalmeldung 90 während der Übermittlung verändert wird (ein Bit genügt), so wird sich auch deren Hashwert 95 verändern. Somit würde der Empfänger feststellen, dass der Hashwert 95, den er aufgrund der Originalmeldung berechnet hat, nicht mit dem aus der Signatur dechiffrierten Hashwert 96 übereinstimmt, was bedeutet, dass die Signatur nicht korrekt ist. Folglich hat der Empfänger bei einer erfolgreichen Überprüfung der digitalen Signatur die Garantie, dass die Meldung 90 nicht verändert wurde (Integrität).

Da nur der Hersteller einer Signatur im Besitz seines privaten Schlüssels 91 ist, kann nur er die Digitale Signatur 92 herstellen. Dies bedeutet, dass der Empfänger, der die Digitale Signatur 92 besitzt, nachweisen kann, dass nur der Absender die Signatur herstellen konnte (Nichtabstreitbarkeit des Informationsursprungs).

### Zertifizierung des öffentlichen Schlüssels

Die Digitale Signatur 92 ermöglicht also die Nichtabstreitbarkeit des Ursprungs und die Integritätsgarantie einer Meldung 90. Nun bleibt aber noch ein Sicherheitsproblem, nämlich die Echtheitsgarantie des öffentlichen Schlüssels 97 des Absenders. Bis jetzt hat nämlich der Empfänger keine Garantie dafür, dass der öffentliche Schlüssel 97 tatsächlich derjenige des Absenders ist. Die Signatur kann zwar gültig sein, der damit verbundene öffentliche Schlüssel 97 könnte aber theoretisch von einem Betrüger stammen.

Der Empfänger einer Meldung 90 braucht also die Gewissheit, dass der öffentliche Schlüssel 97 des Absenders, in dessen Besitz er ist, tatsächlich dem richtigen Absender gehört. Diese Gewissheit kann er auf verschiedene Weise erlangen. Eine Möglichkeit ist, dass der Absender ihm den öffentlichen Schlüssel 97 irgendwann einmal persönlich übergeben hat. Oder der Empfänger ruft den Absender an und vergleicht z.B. die ersten 10 Stellen des öffentlichen Schlüssels. Diese Methoden sind jedoch umständlich und bedingen, dass sich die Benützer entweder schon kennen oder sich vorher getroffen haben.

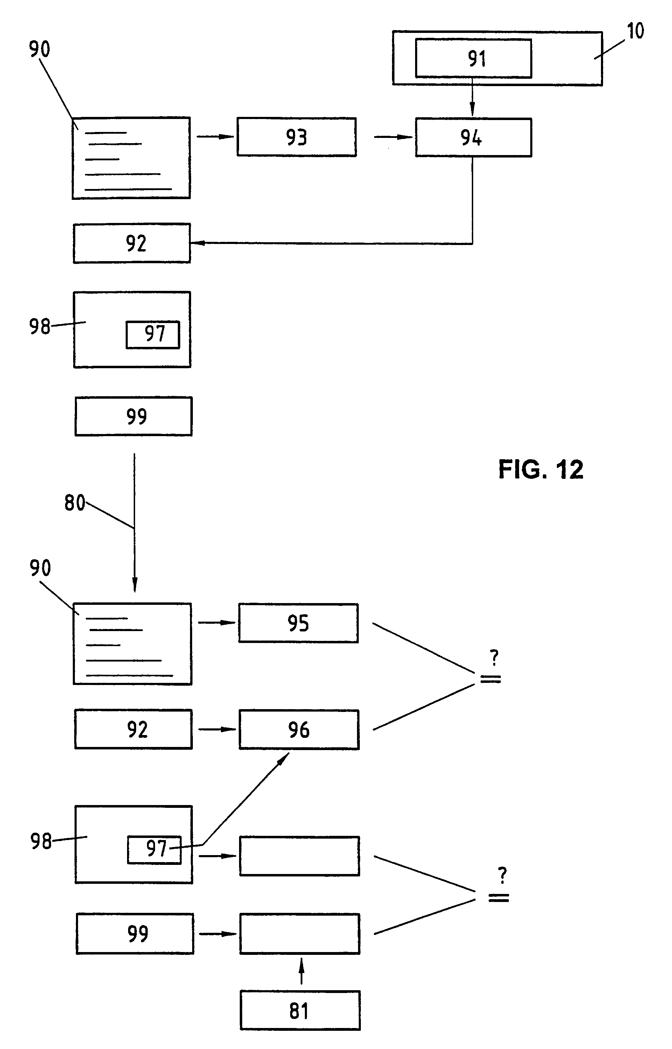

Besser wäre es, wenn es eine Instanz gäbe, welche die Zugehörigkeit eines öffentlichen Schlüssels zu einer gewissen Person garantiert. Diese Instanz wird Zertifizierungsinstanz (Certification Authority / CA) genannt und bürgt dafür, dass ein bestimmter öffentlicher Schlüssel 97 einer bestimmten Person gehört. Sie tut dies, indem sie ein sog. Zertifikat 98 des öffentlichen Schlüssels 97 herstellt (Figur 12). Es besteht im Wesentlichen aus dem öffentlichen Schlüssel und dem Namen des Besitzers. Das Ganze wird dann von der Zertifizierungsinstanz signiert (Signatur 98). Durch die Zertifizierung bindet die CA also einen öffentlichen Schlüssel 97 an einen bestimmten Absender (Kunden, POT oder Server). Für alle Benützer wird so von der CA ein Zertifikat des öffentlichen Schlüssels ausgestellt. Diese Zertifikate sind für alle Benützer zugänglich.

Durch die Überprüfung der digitalen Signatur 99 des Zertifikates des Absenders sowie der Signatur 92 der Meldung selbst hat der Empfänger den Beweis, dass die Meldung 90 von demjenigen unterschrieben wurde, für den er sich ausgibt (Authentifikation).

Es ist zu beachten, dass die Schlüsselzertifikate 98 nicht speziell geschützt werden müssen, da sie unfälschbar sind. Falls der Zertifikatsinhalt nämlich verändert wurde, merkt dies der Empfänger, da die Signatur 99 nicht mehr korrekt ist. Und da niemand ausser der CA den privaten Schlüssel der CA hat, ist es niemandem möglich, die Signatur der CA zu fälschen.

Es gibt verschiedene Möglichkeiten, wie die Schlüsselzertifikate 98, 99 verbreitet werden. Eine Möglichkeit ist, die Zertifikate 98, 99 mit jeder Meldung mitzuschicken.

Mit Hilfe der oben beschriebenen Techniken können also zwei einander unbekannte Kunden, POT und Server gegenseitig Informationen austauschen, und dies auf eine sichere Art und Weise.

### Verteilung des öffentlichen Schlüssels der Zertifizierungsinstanz

Nun bleibt noch ein letztes Problem. Wie im vorhergehenden Kapitel beschrieben, überprüft der Empfänger einer Meldung das Zertifikat des Absenders. Dazu benötigt er den öffentlichen Schlüssel der Zertifizierungsinstanz. Die CA könnte nun zwar ihren eigenen öffentlichen Schlüssel zertifizieren, dies macht aber wenig Sinn, da es ja jedem möglich ist, selber ein Schlüsselpaar zu generieren und selbst ein CA-Zertifikat (mit dem entsprechenden Namen der CA) herzustellen. Für den öffentlichen Schlüssel der CA gibt es also kein eigentliches Zertifikat. Diese Tatsache erlaubt theoretisch einem Kriminellen, sich als Zertifizierungsinstanz auszugeben und so falsche Schlüsselpaare und Zertifikate herzustellen und zu verteilen. Darum muss der öffentliche Schlüssel der Zertifizierungsinstanz auf einem sicheren Weg zum Benützer gelangen. Der Benützer muss überzeugt sein, den richtigen Schlüssel der CA zu besitzen.

Eine Lösung, die sich sofort anbietet, ist, den öffentlichen Schlüssel der Zertifizierungsinstanz in der SIM-Karte des Benützers zu speichern. Jener kann zwar (im Gegensatz zum privaten Schlüssel des Benützers) gelesen, aber nicht überschrieben oder gelöscht werden. Dies wird durch die spezielle Architektur des Chips 101 erreicht.

### Übermittlung einer digital signierten Meldung ohne Chiffrierung: Zusammenfassung

- Der Absender unterschreibt die Meldung 90 mit seinem privaten, auf der Karte 10 gespeicherten Schlüssel 91, um dessen Ursprung zu bestätigen.
- Die Originalmeldung 90 wird zusammen mit der Signatur 92 und dem signierten Zertifikat 98, 99 des Absenders an den Empfänger gesendet (Pfeil 80).
- Der Empfänger überprüft die Digitale Signatur 92 des Dokumentes 90 mit Hilfe des im Zertifikat 98 des Absenders mitgeschickten öffentlichen Schlüssels 97 des Absenders.
- Ausserdem versichert er sich der Echtheit des öffentlichen Schlüssels 97 des Absenders, indem er die Digitale Signatur 99 des Zertifikats 98 überprüft. Dazu verwendet er den öffentlichen Schlüssel 81 der Zertifizierungsinstanz.

### Chiffrierung der Meldung

Um die Vertraulichkeit einer Übermittlung, d.h. den Schutz vor der Einsichtnahme durch Unbefugte, zu gewährleisten, muss die Meldung verschlüsselt (chiffriert) werden. Dafür gibt es theoretisch zwei Möglichkeiten. Man könnte die Meldung mit dem öffentlichen Schlüssel des Empfängers verschlüsseln. Da nur der Empfänger im Besitz des dazugehörigen privaten Schlüssels ist, kann folglich nur er die Meldung entschlüsseln. Nun ist es aber so, dass die asymmetrischen Chiffrieralgorithmen im Vergleich zu den symmetrischen sehr langsam sind.

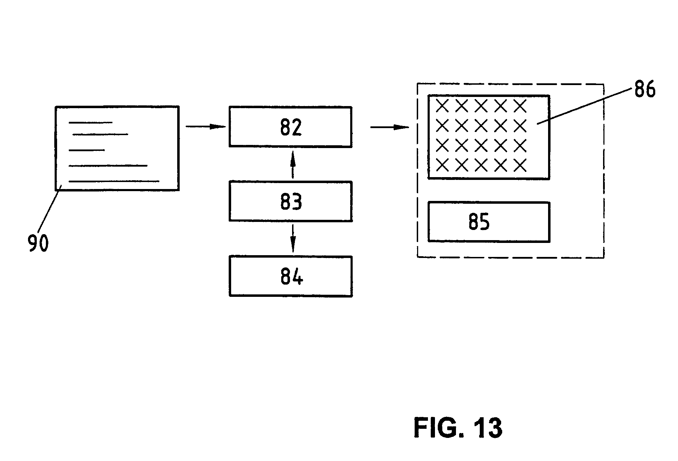

Darum wird vorzugsweise ein symmetrischer Algorithmus für die Chiffrierung der Meldung benutzt (Figur 13). Der Absender einer Meldung 90 generiert einen symmetrischen Schlüssel 83, mit dessen Hilfe er die Meldung 90 verschlüsselt. Diese symmetrische Verschlüsselung nimmt nur einen Bruchteil der Zeit in Anspruch, die bei der Verwendung eines asymmetrischen Algorithmus benötigt würde. Der Empfänger muss denselben symmetrischen Schlüssel kennen. Er muss ihm also übermittelt werden, und zwar verschlüsselt, da sonst ein Betrüger den Schlüssel 83 bei der Übertragung mitlesen und die empfangene Meldung 86 entschlüsseln könnte. Darum wird der symmetrische Schlüssel 83, der sogenannte Session Key, mit dem öffentlichen Schlüssel 84 des Empfängers verschlüsselt. Der so entstandene verschlüsselte Session Key wird auch Token 85 genannt. Das Token 85 enthält also den für die Chiffrierung der Meldung 90 benützten symmetrischen Schlüssel 83, verschlüsselt mit dem öffentlichen (asymmetrischen) Schlüssel 84 des Empfängers. Das Token 85 wird zusammen mit der verschlüsselten Meldung 86, der Signatur 92 und dem Zertifikat 98, 99 übermittelt.

Der Empfänger entschlüsselt das Token 85 mit seinem privaten Schlüssel. So erhält er den für das Entschlüsseln der Meldung benötigten symmetrischen Schlüssel 83. Da nur er den privaten Schlüssel hat, kann nur er die Meldung dechiffrieren.

### Übermittlung einer digital signierten Meldung mit Chiffrierung: Zusammenfassung

Absender:
- Der Absender unterschreibt die Meldung 90 mit seinem privaten Schlüssel 91.
- Dann verschlüsselt er die Meldung 90 mit einem von ihm generierten symmetrischen Schlüssel 83.
- Diesen symmetrischen Schlüssel verschlüsselt er dann mit dem öffentlichen Schlüssel 84 des Empfängers. Daraus entsteht das Token 85.
- Die Originalmeldung 90 wird dann, zusammen mit dem der Signatur 92, dem Token 85 und dem signierten Zertifikat 98, 99, an den Empfänger gesendet.

Empfänger:
- Der Empfänger entschlüsselt zuerst das Token 85 mit seinem privaten Schlüssel.
- Mit dem daraus gewonnenen symmetrischen Schlüssel 83 entschlüsselt er die Meldung 90.
- Nun überprüft er die Digitale Signatur 92 der Meldung 90 mit Hilfe des im Zertifikat 98 des Absenders enthaltenen öffentlichen Schlüssels 97.
- Ausserdem versichert er sich der Echtheit des öffentlichen Schlüssels 97 des Absenders, indem er die Digitale Signatur 99 des Zertifkats 98 durch die Zertifizierungsinstanz überprüft. Dazu verwendet er den öffentlichen Schlüssel 81 der Zertifizierungsinstanz.

### Revocation List / Ungültigkeitserklärung von Zertifikaten

Nehmen wir an, einem Kunden wird seine SIM-Karte, welche seinen privaten Schlüssel 91 enthält, gestohlen. Der Einbrecher kann nun diesen privaten Schlüssel einsetzen und sich für den Bestohlenen ausgeben, ohne dass dies der Empfänger merkt. Darum braucht es einen Mechanismus, um allen Benützern mitzuteilen, dass das zum gestohlenen privaten Schlüssel 91 gehörige Zertifikat nicht mehr gültig ist. Dies geschieht mittels einer sogenannten Liste von ungültigen Zertifikaten, einer oben erwähnten Certificate Revocation List (CRL). Sie wird von der CA digital signiert und veröffentlicht, d.h., sie wird allen POT und Servern zugänglich gemacht. Jeder Empfänger einer Meldung von einem Kunden muss nun also zusätzlich zu der Überprüfung der Signatur und des Zertifikats des Absenders kontrollieren, ob letzteres sich nicht in der Revokation List befindet, d.h., ob es nicht ungültig ist.

Damit die Revokation List nicht zu gross wird, werden statt des ganzen Zertifikats nur die Seriennummer sowie das Datum, an dem das Zertifikat für ungültig erklärt wurde, eingefügt. Die Liste besteht also aus Seriennummern und Ungültigkeitserklärungsdaten, welche am Schluss von der CA digital signiert werden. Vorhanden sind ebenfalls das Veröffentlichungsdatum der Liste und der Name der CA.

### Das Trust Center und Trusted-Third-Party-Dienste

Wie wir oben gesehen haben, braucht es in einem offenen und verteilten System von vielen Benützern, in dem zwei Benützer, die über kein gemeinsames Vertrauensverhältnis verfügen, sicher miteinander kommunizieren wollen, eine dritte Stelle, die diesen Benützern gewisse Sicherheitsdienste zur Verfügung stellt, da nämlich sonst für die Benützer der Aufwand zu gross wird, selber die notwendigen Schlüssel auszutauschen und zu verwalten. Diese Stelle wird Trust Center oder Trusted-Third-Party (TTP) genannt und die Dienste, die sie anbietet, werden als TTP-Dienste bezeichnet. Die CA ist z.B. ein solcher Dienst. Die TTP übernimmt die Schlüsselverwaltungsaufgaben für die Benützer und geniesst darum deren Vertrauen. TTP-Dienste dienen also zur Sicherung von diversen Applikationen und Protokollen.

Die Bestandteile einer Trusted-Third-Party sind:
- Registrierungsinstanz (RA): Er identifiziert die Benützer, nimmt ihre Daten auf und leitet sie an die Zertifizierungsinstanz weiter. Die Identifikation der Benützer ist nötig, da ja die CA dafür garantiert, dass ein bestimmter öffentlicher Schlüssel einer bestimmten Person gehört. Dafür muss sich diese Person aber zuerst identifizieren.
- Zertifizierungsinstanz (CA): Sie stellt die Schlüsselzertifikate und Revocation Lists her. Diese werden anschliessend zur Veröffentlichung in ein Verzeichnis abgelegt oder direkt dem Benützer zugesandt.
- Schlüsselgenerierungsdienst: Er generiert die Schlüssel für die Benützer. Der private Schlüssel wird auf einem sicheren Kanal dem Benützer übergeben, der öffentliche Schlüssel wird an die CA gesandt zwecks Zertifizierung.
- Schlüsselpersonalisierungsdienst: Er legt die privaten Schlüssel in einem Modul (z.B. einer Chipkarte) ab, um sie vor unbefugtem Zugriff zu schützen.
- Schlüsselhinterlegungsdienst (Key Escrow): Er speichert eine Kopie der verwendeten Schlüssel (zwecks Rückerstattung im Falle eines Verlusts oder zwecks "Abhören" der Polizei aus Staatsschutz- oder Verbrechensbekämpfungsgründen).
- Archivierungsdienst: Er archiviert die Schlüsselzertifikate (zwecks langfristiger Garantie der Überprüfbarkeit von digitalen Signaturen).
- Verzeichnisdienst: Er stellt den Benützern Schlüsselzertifikate und Revocation Lists zur Verfügung.
- Notariatsdienste für
   1. Sende- und Empfangsbeweis
   2. Zeitstempel
   3. Beglaubigung der inhaltlichen Korrektheit (analog zu bestehenden Notariatsdiensten

In den oben geschilderten Abläufen steht häufig geschrieben "Der Empfänger überprüft die Signatur" oder "Der Absender verschlüsselt die Meldung". Natürlich muss der Benützer all diese Funktionen im Normalfall nicht explizit selber ausführen, sondern das Mobilsystem 1, 10 bzw. der Finanzserver 4 macht das für ihn automatisch.

## Patentansprüche

1. Transaktionsverfahren zwischen einem Kunden und einem fixen Point-of-Transaction-Gerät (POT-Gerät) (2, 2', 2", 2'''), das durch ein Telekommunikationsnetz (5, 6) mit einem Server (4) verbunden ist, wobei das Verfahren die Verknüpfung im POT-Gerät (2, 2', 2", 2''') von Kundendaten mit einer POT-Gerätidentifizierung (POSID), die im POT-Gerät (2, 2', 2", 2''') gelesen oder erfasst wird, und mit transaktionsspezifischen Daten (A) zu einem Transaktionsbeleg umfasst, wobei die Kundendaten mindestens eine Kundenidentifizierung (IDUI) umfassen, die im Speicher eines tragbaren Identifizierungselementes (10, 10') des Kunden gelesen wird, welches Identifizierungselement (10, 10') mindestens einen Prozessor (100, 100', 101) enthält und so eingerichtet ist, dass es Daten direkt über eine kontaktlose Schnittstelle (101-20) an das benannte POT-Gerät (2, 2', 2", 2"') übertragen kann, und wobei das Verfahren die Übermittlung des Transaktionsbelegs durch das benannte Telekommunikationsnetz (5, 6) an den benannten Server (4) umfasst, **dadurch gekennzeichnet,**
**dass** vor der Übermittlung des Transaktionsbelegs an den benannten Server vom benannten POT-Gerät (2, 2', 2", 2''') eine Belastungsaufforderung, welche mindestens die transaktionsspezifischen Daten (A), die POT-Geräteidentifizierung (POSID) und die Kundenidentifizierung (IDUI) umfasst, direkt durch die benannte kontaktlose Schnittstelle (101-20) zur Überprüfung, ob die Belastungsaufforderung mit der Kundenidentifizierung (IDUI) korreliert, an das Identifizierungselement (10, 10') des Kunden übertragen wird.

2. Transaktionsverfahren gemäss dem vorhergehenden Anspruch, **dadurch gekennzeichnet, dass** die transaktionsspezifischen Daten mindestens einen zu bezahlenden Geldbetrag (A) umfassen, welcher Geldbetrag (A) zur Solvenzprüfung mit einem im tragbaren Identifizierungselement (10, 10') gespeicherten Geldbetrag verglichen wird.

3. Transaktionsverfahren gemäss einem der vorhergehenden Ansprüche, **dadurch gekennzeichnet, dass** das Identifizierungselement (10) eine SIM-Karte ist.

4. Transaktionsverfahren gemäss einem der Ansprüche 1 oder 2, **dadurch gekennzeichnet, dass** das Identifizierungselement ein Transponder (10') ist.

5. Transaktionsverfahren gemäss dem vorhergehenden Anspruch, **dadurch gekennzeichnet, dass** der benannte Transponder (10') über eine Infrarotschnittstelle mit dem POT-Gerät (2, 2', 2", 2''') kommuniziert.

6. Transaktionsverfahren gemäss einem der Ansprüche 1 bis 4, **dadurch gekennzeichnet, dass** das Identifizierungselement (10, 10') über eine integrierte Spule mit dem POT-Gerät (2, 2', 2", 2''') kommuniziert.

7. Transaktionsverfahren gemäss einem der vorhergehenden Ansprüche, **dadurch gekennzeichnet, dass** das Identifizierungselement (10, 10') so eingerichtet ist, dass es funktionell mit einem Mobilgerät (1, 24) kooperieren kann, um mittels diesem Mobilgerät (1, 24) Kurzmeldungen durch ein Mobilfunknetz (6) zu senden und/oder zu empfangen.

8. Transaktionsverfahren gemäss dem vorhergehenden Anspruch, **dadurch gekennzeichnet, dass** das benannte Mobilgerät (24) im POT-Gerät (2") enthalten ist.

9. Transaktionsverfahren gemäss einem der Ansprüche 7 oder 8, **dadurch gekennzeichnet, dass** der benannte Transaktionsbeleg durch das benannte Mobilfunknetz (6) an den benannten Server (4) übermittelt wird.

10. Transaktionsverfahren gemäss einem der vorhergehenden Ansprüche, **dadurch gekennzeichnet, dass** mindestens gewisse Daten, die über die benannte kontaktlose Schnittstelle (101-20) zwischen dem POT-Gerät (2, 2', 2", 2''') und dem Identifizierungselement (10, 10') übertragen werden, verschlüsselt werden.

11. Transaktionsverfahren gemäss einem der vorhergehenden Ansprüche, **dadurch gekennzeichnet, dass** die durch das benannte Telekommunikationsnetz (5, 6) übertragenen Transaktionsbelege verschlüsselt werden.

12. Transaktionsverfahren gemäss dem vorhergehenden Anspruch, **dadurch gekennzeichnet, dass** die durch das benannte Telekommunikationsnetz (5, 6) übertragenen Transaktionsbelege während der Übertragung nicht entschlüsselt werden.

13. Transaktionsverfahren gemäss dem vorhergehenden Anspruch, **dadurch gekennzeichnet, dass** die Transaktionsbelege (90) mit einem symmetrischen Algorithmus verschlüsselt werden, wobei der symmetrische Algorithmus einen mit einem asymmetrischen Algorithmus verschlüsselten Session Key (83) benützt.

14. Transaktionsverfahren gemäss einem der vorhergehenden Ansprüche, **dadurch gekennzeichnet, dass** die durch das benannte Telekommunikationsnetz (5, 6) übertragenen Transaktionsbelege zertifiziert werden.

15. Transaktionsverfahren gemäss einem der vorhergehenden Ansprüche, **dadurch gekennzeichnet, dass** die durch das benannte Telekommunikationsnetz (5, 6) übertragenen Transaktionsbelege eine vom Server nachprüfbare elektronische Signatur des Identifizierungselements (10, 10') enthalten.

16. Transaktionsverfahren gemäss einem der vorhergehenden Ansprüche, **dadurch gekennzeichnet, dass** die durch das benannte Telekommunikationsnetz (5, 6) übertragenen Transaktionsbelege eine vom Server nachprüfbare elektronische Signatur des POT-Geräts (2, 2', 2", 2''') enthalten.

17. Transaktionsverfahren gemäss einem der Ansprüche 11 bis 16, **gekennzeichnet durch** folgende Schritte :
Herstellung des Hashwertes (93) von den Transaktionsbelegen (90),
Chiffrierung dieses Hashwerts (93) mit einem auf dem Identifizierungselement (10, 10') gespeicherten privaten Schlüssel (91),
Signierung der Transaktionsbelege (90) mit dem chiffrierten Hashwert (92).

18. Transaktionsverfahren gemäss einem der Ansprüche 1 bis 17, **dadurch gekennzeichnet, dass** die Transaktionsbelege über eine Clearingeinheit (3) an den Server (4) übermittelt werden.

19. Transaktionsverfahren gemäss dem vorhergehenden Anspruch, **dadurch gekennzeichnet, dass** die Datenelemente (IDUI), die für das Clearing in der benannten Clearingeinheit (3) benötigt werden, nicht verschlüsselt werden, so dass die Clearingeinheit die Transaktionsbelege nicht entschlüsseln muss.

20. Transaktionsverfahren gemäss einem der vorhergehenden Ansprüche, **dadurch gekennzeichnet, dass** die transaktionsspezifischen Daten (A) im POT-Gerät (2, 2', 2", 2''') gelesen oder erfasst werden.

21. Transaktionsverfahren gemäss einem der Ansprüche 7 bis 20, **dadurch gekennzeichnet, dass** die transaktionsspezifischen Daten (A) im Mobilgerät (1) gelesen oder erfasst werden.

22. Transaktionsverfahren gemäss einem der vorhergehenden Ansprüche, **dadurch gekennzeichnet, dass** der Server (4) eine Kundenschwarzliste speichert, und dass das Verfahren unterbrochen wird, wenn die empfangene Kundenidentifizierung (IDUI) in der Kundenschwarzliste enthalten ist.

23. Transaktionsverfahren gemäss einem der vorhergehenden Ansprüche, **dadurch gekennzeichnet, dass** der Server (4) eine POT-Schwarzliste speichert, und dass das Verfahren unterbrochen wird, wenn die empfangene POT-Gerätidentifizierung (POSID) in der POT-Schwarzliste enthalten ist.

24. Transaktionsverfahren gemäss einem der vorhergehenden Ansprüche, **dadurch gekennzeichnet, dass** das POT-Gerät (2, 2', 2", 2''') eine vom Server (4) aktualisierte Kundenschwarzliste speichert, und dass das Verfahren unterbrochen wird, wenn die Kundenidentifizierung (IDUI) in der Kundenschwarzliste enthalten ist.

25. Transaktionsverfahren gemäss einem der Ansprüche 22 bis 24, **dadurch gekennzeichnet, dass** das Identifizierungselement mindestens teilweise gesperrt wird, wenn die Kundenidentifizierung in einer Kundenschwarzliste im POT-Gerät und/oder im Server (4) enthalten ist.

26. Transaktionsverfahren gemäss einem der vorhergehenden Ansprüche, **dadurch gekennzeichnet, dass** das Identifizierungselement (10, 10') ein Stack mit Daten über bereits durchgeführte Transaktionen enthält,
und dass diese Daten vom Server (4) abgerufen werden können.

27. Transaktionsverfahren gemäss einem der vorhergehenden Ansprüche, **dadurch gekennzeichnet, dass** die transaktionspezifischen Daten einen Geldbetrag (A) enthalten, dass der Server (4) von einem Finanzinstitut verwaltet wird, und dass ein auf dem Identifizierungselement (10, 10') gespeicherter Geldbetrag während der Transaktion abgebucht wird.

28. Transaktionsverfahren gemäss dem vorhergehenden Anspruch, **dadurch gekennzeichnet, dass** der auf dem Identifizierungselement (10, 10') gespeicherte Geldbetrag (A) über ein Mobilfunknetz (6) mit Nachladebelegen aus dem Server (4) nachgeladen werden kann.

29. Transaktionsverfahren gemäss Anspruch 27, **dadurch gekennzeichnet, dass** der Geldbetrag (A) in einer Standardwährung angegeben wird.

30. Transaktionsverfahren gemäss einem der vorhergehenden Ansprüche, **dadurch gekennzeichnet, dass** die transaktionsspezifischen Daten aus dem POT-Gerät (2, 2', 2", 2''') an den Server (4) über eine andere kontaktlose Schnittstelle übermittelt werden, als die transaktionsspezifischen Daten aus dem Identifizierungselement (10, 10').

31. Transaktionsverfahren gemäss einem der Ansprüche 8 bis 30, **dadurch gekennzeichnet, dass** mindestens gewisse Daten aus dem Server (4) durch ein Mobilfunknetz (6) an das Mobilgerätteil (24) des POT-Gerätes (2") übertragen werden und von diesem in den Transponder (10') weitergeleitet werden.

32. Identifizierungselement (10, 10'), das für das Transaktionsverfahren gemäss einem der vorhergehenden Ansprüche in Anwendung gebracht werden kann, welches Identifizierungselement (10, 10') mindestens einen Prozessor (100, 100', 101) mit einem Speicherbereich, in welchem eine Kundenidentifizierung (IDUI) gespeichert ist enthält, welches Identifizierungselement (10, 10') elektronische Signierungsmittel enthält, um Transaktionsbelege, die mindestens die Kundenidentifizierung (IDUI) enthalten, mit einer elektronischen Signatur zu versehen, und welches Identifizierungselement (10, 10') eine kontaktlose Schnittstelle (101-20) enthält, um die signierten Transaktionsbelege direkt an ein POT-Gerät (2, 2', 2", 2''') weiterzuleiten, wobei das Identifizierungselement (10, 10') zudem enthält:
Mittel um vom benannten POT-Gerät (2, 2', 2", 2"') eine Belastungsaufforderung, welche mindestens die Kundenidentifizierung (IDUI), eine POT-Geräteidentifizierung (POSID) und transaktionsspezifische Daten (A) umfasst, direkt durch die benannte kontaktlose Schnittstelle (101-20) zur Überprüfung, ob die Belastungsaufforderung mit der Kundenidentifizierung (IDUI) korreliert, entgegenzunehmen.

33. Identifizierungselement (10,10') gemäss dem vorhergehenden Anspruch, **dadurch gekennzeichnet, dass** es zudem enthält:
Mittel um einen in den transaktionsspezifische Daten (A) enthaltenen zu bezahlenden Geldbetrag (A) zur Solvenzprüfung mit einem im Identifizierungselement (10, 10') gespeicherten Geldbetrag zu vergleichen.

34. Identifizierungselement (10, 10') gemäss einem der Ansprüche 32 oder 33, **dadurch gekennzeichnet, dass** die genannten Signierungsmittel folgende Elemente umfassen:
- einen in dem genannten Speicher gespeicherten privaten Schlüssel (91),
- Mittel, um aus einem unverschlüsselten Transaktionsbeleg (90) einen Hashwert (93) herzustellen,
- Mittel, um den Hashwert (93) mit dem genannten privaten Schlüssel (91) zu chiffrieren und um den Transaktionsbeleg mit dem chiffrierten Hashwert (92) zu signieren.

35. Identifizierungselement (10, 10') gemäss einem der Ansprüche 32 bis 34, **dadurch gekennzeichnet, dass** es für die Kommunikation über die kontaktlose Schnittstelle (101-20) eine integrierte Spule umfasst.

36. Identifizierungselement (10') gemäss einem der Ansprüche 32 bis 34, **dadurch gekennzeichnet, dass** es ein Transponder (10') ist, der für die Kommunikation über die kontaktlose Schnittstelle (101-20) einen Infrarot-Sender/Empfänger umfasst.

37. Identifizierungselement (10) gemäss einem der Ansprüche 32 bis 35, **dadurch gekennzeichnet, dass** es eine SIM-Karte (10) ist.

38. Identifizierungselement (10) gemäss vorhergehendem Anspruch, **dadurch gekennzeichnet, dass** die SIM-Karte (10) eine Wertkarte ist.

## Claims

1. Transaction method between a client and a fixed point-of-transaction apparatus (POT apparatus) (2, 2', 2", 2''') which is connected through a telecommunication network (5, 6) to a server (4), the method comprising the linking in the POT apparatus (2, 2', 2", 2"') of client data to a POT-apparatus identification (POSID), which is read or captured in the POT apparatus (2, 2', 2", 2'''), and to transaction-specific data (A), into a transaction voucher, the client data comprising at least one client identification (IDUI) which is read in the memory of a portable identification element (10, 10') of the client, which identification element (10, 10') contains at least one processor (100, 100', 101) and is set up in such a way that it can transmit data directly via a contract-free interface (101-20) to the said POT apparatus (2, 2', 2", 2"'), and the method comprising the transmission of the transaction voucher through the said telecommunication network (5, 6) to the said server (4), **characterised in that**
prior to the transmission of the transaction voucher to the said server from the said POT apparatus (2, 2', 2", 2'"), a debit order, which comprises at least the transaction-specific data (A), the POT-apparatus identification (POSID) and the client identification (IDUI), is transmitted directly through the said contact-free interface (101-20) to the identification element (10, 10') of the client for verification as to whether the debit order correlates with the client identification (IDUI).

2. Transaction method according to the preceding claim, **characterised in that** the transaction-specific data comprise at least one sum of money (A) to be paid, which sum of money (A) is compared for the checking of solvency with a sum of money stored in the portable identification element (10, 10').

3. Transaction method according to one of the preceding claims, **characterised in that** the identification element (10, 10') is a SIM card.

4. Transaction method according to one of the claims 1 or 2, **characterised in that** the identification element is a transponder (10').

5. Transaction method according to the preceding claim, **characterised in that** the said transponder (10') communicates with the POT apparatus (2, 2', 2", 2'") via an infrared interface.

6. Transaction method according to one of the claims 1 to 4, **characterised in that** the identification element (10, 10') communicates with the POT apparatus (2, 2', 2", 2''') via an integrated coil.

7. Transaction method according to one of the preceding claims, **characterised in that** the identification element (10, 10') is set up in such a way that it can co-operate functionally with a mobile apparatus (1, 24) in order to send and/or to receive short messages by means of this mobile apparatus (1, 24) through a mobile radio network (6).

8. Transaction method according to the preceding claim, **characterised in that** the said mobile apparatus (24) is contained in the POT apparatus (2).

9. Transaction method according to one of the claims 7 or 8, **characterised in that** the said transaction voucher is transmitted to the said server (4) through the said mobile radio network (6).

10. Transaction method according to one of the preceding claims, **characterised in that** at least certain data transmitted via the said contact-free interface (101-20) between the POT apparatus (2, 2', 2", 2''') and the identification element (10, 10') are encoded.

11. Transaction method according to one of the preceding claims, **characterised in that** the transaction vouchers transmitted by the said telecommunication network (5, 6) are encoded.

12. Transaction method according to the preceding claim, **characterised in that** the transaction vouchers transmitted by the said telecommunication network (5, 6) are not decoded during transmission.

13. Transaction method according to the preceding claim, **characterised in that** the transaction vouchers (90) are encoded by means of a symmetrical algorithm, the symmetrical algorithm using a session key (83) encoded by means of an asymmetrical algorithm.

14. Transaction method according to one of the preceding claims, **characterised in that** the transaction vouchers transmitted by the said telecommunication network (5) are certified.

15. Transaction method according to one of the preceding claims, **characterised in that** the transaction vouchers transmitted by the said telecommunication network (5, 6) contain an electronic signature of the identification element (10, 10') verifiable by the server.

16. Transaction method according to one of the preceding claims, **characterised in that** the transaction vouchers transmitted by the said telecommunication network (5, 6) contain an electronic signature of the POT apparatus (2, 2', 2", 2"') verifiable by the server.

17. Transaction method according to one of the claims 11 to 16, **characterised by** the following steps:
producing the hash value (93) from the transaction vouchers (90),
encrypting this hash value (93) by means of a private key (91) stored on the identification element (10, 10'),
signing the transaction vouchers (90) with the encrypted hash value (92).

18. Transaction method according to one of the claims1 to 17, **characterised in that** the transaction vouchers are transmitted to the server (4) via a clearing unit (3).

19. Transaction method according to the preceding claim, **characterised in that** the data elements (IDUI) needed for clearing in the said clearing unit (3) are not encoded, so that the clearing unit need not decode the transaction vouchers.

20. Transaction method according to one of the preceding claims, **characterised in that** the transaction-specific data (A) are read or entered in the POT apparatus (2, 2', 2", 2'").

21. Transaction method according to one of the claims 7 to 20, **characterised in that** the transaction-specific data (A) are read or entered in the mobile apparatus (1).

22. Transaction method according to one of the preceding claims, **characterised in that** the server (4) stores a client blacklist, and that the process is interrupted if the client identification (IDUI) received is contained in the client blacklist.

23. Transaction method according to one of the preceding claims, **characterised in that** the server (4) stores a POT blacklist, and that the process is interrupted if the POT apparatus identification (POSID) received is contained in the POT blacklist.

24. Transaction method according to one of the preceding claims, **characterised in that** the POT apparatus (2, 2', 2", 2"') stores a client blacklist updated by the server (4), and that the process is interrupted if the client identification (IDUI) is contained in the client blacklist.

25. Transaction method according to one of the claims 22 to 24, **characterised in that** the identification element is blocked at least partially if the client identification is contained in a client blacklist in the POT apparatus and/or in the server (4).

26. Transaction method according to one of the preceding claims, **characterised in that** the identification element (10, 10') contains a stack with data concerning transactions already carried out,
and that these data can be retrieved by the server (4).

27. Transaction method according to one of the preceding claims, **characterised in that** the transaction-specific data contain an amount of money (A), that the server (4) is administered by a financial institution, and that a sum of money stored on the identification element (10, 10') is debited during the transaction.

28. Transaction method according to the preceding claim, **characterised in that** the sum of money stored on the identification element (10, 10') can be recharged over a mobile radio network (6) by means of recharging vouchers from the server (4).

29. Transaction method according to claim 27, **characterised in that** the amount of money (A) is indicated in a standard currency.

30. Transaction method according to one of the preceding claims, **characterised in that** the transaction-specific data from the POT apparatus (2, 2', 2", 2"') are transmitted to the server (4) via a different contact-free interface than the transaction-specific data from the identification element (10, 10').

31. Transaction method according to one of the claims 8 to 30, **characterised in that** at least certain data from the server (4) are transmitted by a mobile radio network (6) to the mobile apparatus part (24) of the POT apparatus (2") and are relayed from the latter into the transponder (10").

32. Identification element (10, 10') which can be used for the transaction method according to one of the preceding claims, which identification element (10, 10') contains at least one processor (100, 100';101) having a memory area in which a client identification (IDUI) is stored, which identification element (10, 10') contains electronic signing means for providing transaction vouchers, containing at least the client identification (IDUI), with an electronic signature, and which identification element (10, 10') contains a contact-free interface (101-20) for relaying the signed transaction vouchers directly to a POT apparatus (2, 2', 2", 2'"), the identification element (10, 10') containing in addition:
means for accepting from the said POT apparatus (2, 2', 2", 2'") a debit order, which comprises at least the client identification (IDUI), a POT-apparatus identification (POSID) and transaction-specific data (A), directly through the said contact-free interface (101-20) for verification as to whether the debit order correlates with the client identification (IDUI).

33. Identification element (10, 10') according to the preceding claim, **characterised in that** it contains in addition:
means for comparing a sum of money (A) to be paid, contained in the transaction-specific data (A), with a sum of money stored in the identification element (10, 10') for the checking of solvency.

34. Identification element (10, 10') according to the preceding claim, **characterised in that** the said signing means comprise the following elements:
- a private key (91) stored in the said memory,
- means for producing a hash value (93) from an uncoded transaction voucher (90),
- means for encrypting the hash value (93) by means of the said private key (91) and for signing the transaction voucher with the encrypted hash value (92).

35. Identification element (10, 10') according to one of the claims 32 to 34, **characterised in that** it comprises an integrated coil for communication via the contact-free interface (101-20).

36. Identification element (10') according to one of the claims 32 to 34, **characterised in that** it is a transponder (10') which comprises an infrared transceiver for communication via the contact-free interface (101-20).

37. Identification element (10) according to one of the claims 32 to 35, **characterised in that** it is a SIM card (10).

38. Identification element (10, 10') according to the preceding claim, **characterised in that** the SIM card (10, 10') is a value card.

## Revendications

1. Procédé de transaction entre un client et un appareil fixe de point de transaction (appareil PODT) (2, 2', 2", 2"') qui est relié à un serveur (4) par un réseau de télécommunications (5, 6), ce procédé comprenant l'association, dans l'appareil POT (2, 2', 2", 2"'), de données sur le client à une identification d'appareil POT (POSID) qui est lue ou acquise dans l'appareil POT (2, 2', 2", 2"') et à des données (A) spécifiques de la transaction, ce qui donne un relevé de transaction, les données sur le client comprenant au moins une identification de client (IDUI) qui est lue dans la mémoire d'un élément d'identification portable (10, 10') du client, élément d'identification (10, 10') qui possède au moins un processeur (100, 100', 101) et qui est réalisé de manière à pouvoir transmettre des données directement, en passant par une interface sans contact (101-20), à l'appareil POT (2, 2', 2", 2"'), et ce procédé comprenant la transmission du relevé de transaction par le réseau de télécommunications (5, 6) au serveur (4), **caractérisé en ce**
**que**, avant la transmission du relevé de transaction au serveur par l'appareil POT (2, 2', 2", 2"'), une demande de débit comprenant au moins les données spécifiques de la transaction (A), l'identification de l'appareil POT (POSID) et l'identification du client (IDUI) est envoyée directement, en passant par l'interface sans contact (101-20), à l'élément d'identification (10, 10') du client, aux fins de vérification de la correspondance entre la demande de débit et l'identification du client (IDUI).

2. Procédé de transaction selon la revendication précédente, **caractérisé en ce que** les données spécifiques de la transaction comprennent au moins une somme d'argent à payer (A) qui est comparée, aux fins de contrôle de solvabilité, à une somme enregistrée dans l'élément d'identification portatif (10, 10').

3. Procédé de transaction selon l'une des revendications précédentes, **caractérisé en ce que** l'élément d'identification (10) est une carte SIM.

4. Procédé de transaction selon la revendication 1 ou 2, **caractérisé en ce que** l'élément d'identification est un répondeur (10').

5. Procédé de transaction selon la revendication précédente, **caractérisé en ce que** le répondeur (10') communique avec l'appareil POT (2, 2', 2", 2"') par l'intermédiaire d'une interface à infrarouge.

6. Procédé de transaction selon l'une des revendications 1 à 4, **caractérisé en ce que** l'élément d'identification (10, 10') communique avec l'appareil POT (2, 2', 2", 2"') par l'intermédiaire d'une bobine intégrée.

7. Procédé de transaction selon l'une des revendications précédentes, **caractérisé en ce que** l'élément d'identification (10, 10') est réalisé de telle manière qu'il puisse opérer de concert, pour son fonctionnement, avec un appareil mobile (1, 24) afin d'envoyer ou de recevoir, ou les deux, des messages courts au moyen de cet appareil mobile (1, 24), grâce à un réseau radio mobile (6).

8. Procédé de transaction selon la revendication précédente, **caractérisé en ce que** l'appareil mobile (24) se trouve dans l'appareil POT (2").

9. Procédé de transaction selon la revendication 7 ou 8, **caractérisé en ce que** le relevé de transaction est communiqué au serveur (4) par le réseau radio mobile (6).

10. Procédé de transaction selon l'une des revendications précédentes, **caractérisé en ce qu'**au moins certaines données qui sont transmises, par l'intermédiaire de l'interface sans contact (101-20), entre l'appareil POT (2, 2', 2", 2"') et l'élément d'identification (10, 10') sont cryptées.

11. Procédé de transaction selon l'une des revendications précédentes, **caractérisé en ce que** les relevés de transactions transmis par le réseau de télécommunications (5, 6) sont cryptés.

12. Procédé de transaction selon la revendication précédente, **caractérisé en ce que** les relevés de transactions transmis par le réseau de télécommunications (5, 6) ne sont pas décryptés pendant la transmission.

13. Procédé de transaction selon la revendication précédente, **caractérisé en ce que** les relevés de transactions (90) sont cryptés à l'aide d'un algorithme symétrique qui utilise une clef de session (83) cryptée à l'aide d'un algorithme dissymétrique.

14. Procédé de transaction selon l'une des revendications précédentes, **caractérisé en ce que** les relevés de transactions transmis par le réseau de télécommunications (5, 6) sont certifiés.

15. Procédé de transaction selon l'une des revendications précédentes, **caractérisé en ce que** les relevés de transactions transmis par le réseau de télécommunications (5, 6) comportent une signature électronique de l'élément d'identification (10, 10') qui peut être vérifiée par le serveur.

16. Procédé de transaction selon l'une des revendications précédentes, **caractérisé en ce que** les relevés de transactions transmis par le réseau de télécommunications (5, 6) comportent une signature électronique de l'appareil POT (2, 2', 2", 2"') qui peut être vérifiée par le serveur.

17. Procédé de transaction selon l'une des revendications 11 à 16, **caractérisé par** les opérations suivantes :
établissement de la valeur de hachage (93) des relevés de transactions (90),
chiffrage de cette valeur de hachage (93) avec une clef privée (91) enregistrée dans l'élément d'identification (10, 10'),
signature des relevés de transactions (90) avec la valeur de hachage chiffrée (92).

18. Procédé de transaction selon l'une des revendications 1 à 17, **caractérisé en ce que** les relevés de transactions sont envoyés au serveur (4) en passant par une unité de compensation (3).

19. Procédé de transaction selon la revendication précédente, **caractérisé en ce que** les éléments de données (IDUI) dont on a besoin pour la compensation dans l'unité de compensation (3) ne sont pas cryptés, de telle sorte qu'il n'est pas nécessaire que l'unité de compensation décrypte les relevés de transactions.

20. Procédé de transaction selon l'une des revendications précédentes, **caractérisé en ce que** les données spécifiques des transactions (A) sont lues ou acquises dans l'appareil POT (2, 2', 2", 2"').

21. Procédé de transaction selon l'une des revendications 7 à 20, **caractérisé en ce que** les données spécifiques des transactions (A) sont lues ou acquises dans l'appareil mobile (1).

22. Procédé de transaction selon l'une des revendications précédentes, **caractérisé en ce que** le serveur (4) met en mémoire une liste noire de clients et que l'exécution du procédé est interrompue si l'identification de client (IDUI) reçue figure sur cette liste noire.

23. Procédé de transaction selon l'une des revendications précédentes, **caractérisé en ce que** le serveur (4) met en mémoire une liste noire de POT et que l'exécution du procédé est interrompue si l'identification reçue d'appareil POT (POSID) figure sur cette liste noire.

24. Procédé de transaction selon l'une des revendications précédentes, **caractérisé en ce que** l'appareil POT (2, 2', 2", 2"') met en mémoire une liste noire de clients tenue à jour par le serveur (4) et **en ce que** l'exécution du procédé est interrompue si l'identification du client (IDUI) figure sur cette liste noire.

25. Procédé de transaction selon l'une des revendications 22 à 24, **caractérisé en ce que** l'élément d'identification est annulé au moins en partie si l'identification du client figure sur une liste noire de clients qui se trouve dans l'appareil POT ou dans le serveur (4), ou dans les deux.

26. Procédé de transaction selon l'une des revendications précédentes, **caractérisé en ce que** l'élément d'identification (10, 10') comporte une pile contenant des données sur des transactions déjà effectuées,
et **en ce que** le serveur (4) peut appeler ces données.

27. Procédé de transaction selon l'une des revendications précédentes, **caractérisé en ce que** les données spécifiques de la transaction comprennent une somme d'argent (A), que le serveur (4) est géré par un institut financier et qu'une somme d'argent enregistrée sur l'élément d'identification (10, 10') est débitée pendant la transaction.

28. Procédé de transaction selon la revendication précédente, **caractérisé en ce que** la somme d'argent (A) enregistrée sur l'élément d'identification (10, 10') peut être rechargée; par l'intermédiaire d'un réseau radio mobile (6), avec des relevés de rechargement provenant du serveur (4).

29. Procédé de transaction selon la revendication 27, **caractérisé en ce que** la somme d'argent (A) est indiquée dans une monnaie de base.

30. Procédé de transaction selon l'une des revendications précédentes, **caractérisé en ce que** les données spécifiques de la transaction en provenance de l'appareil POT (2, 2', 2", 2"') sont communiquées au serveur (4) par l'intermédiaire d'une autre interface sans contact que pour les données spécifiques de la transaction en provenance de l'élément d'identification (10, 10').

31. Procédé de transaction selon l'une des revendications 8 à 30, **caractérisé en ce qu'**au moins certaines données provenant du serveur (4) sont transmises, par un réseau radio mobile (6), à la partie appareil mobile (24) de l'appareil POT (2"), qui les transmet au répondeur (10').

32. Elément d'identification (10, 10') pouvant être utilisé pour le procédé de transaction selon l'une des revendications précédentes, cet élément d'identification (10, 10') comprenant au moins un processeur (100, 100', 101) qui comporte une zone de mémoire contenant une identification de client (IDUI), cet élément d'identification (10, 10') comprenant des moyens électroniques de signature afin de pourvoir d'une signature électronique les relevés de transactions qui comportent au moins l'identification du client (IDUI) et une interface sans contact (101-20) servant à transmettre les relevés de transactions signés directement à un appareil POT (2, 2', 2", 2"'), cet élément d'identification (10, 10') comprenant en outre :
des moyens permettant de recevoir, de l'appareil POT (2, 2', 2", 2"'), une demande de débit contenant au moins l'identification du client (IDUI), une identification de l'appareil POT (POSID) et des données spécifiques de la transaction (A), directement par l'interface sans contact (101-20) aux fins de vérification de la correspondance entre la demande de débit et l'identification du client (IDUI).

33. Elément d'identification (10, 10') selon la revendication précédente, **caractérisé en ce qu'**il comporte en outre :
des moyens permettant de comparer, aux fins de vérification de la solvabilité, une somme d'argent (A) à payer, contenue dans les données spécifiques de la transaction (A), à une somme d'argent enregistrée dans l'élément d'identification (10, 10').

34. Elément d'identification (10, 10') selon la revendication 32 ou 33, **caractérisé en ce que** les moyens de signature comprennent les éléments suivants :
- une clef (91) enregistrée dans la mémoire mentionnée,
- des moyens permettant de produire une valeur de hachage (93) à partir d'un relevé de transaction non crypté (90),
- des moyens permettant de chiffrer la valeur de hachage (93) avec la clef privée (91) et de signer le relevé de transaction avec la valeur de hachage chiffrée.

35. Elément d'identification (10, 10') selon l'une des revendications 32 à 34, **caractérisé en ce qu'**il comprend une bobine intégrée pour la communication par l'intermédiaire de l'interface sans contact (101-20).

36. Elément d'identification (10') selon l'une des revendications 32 à 34, **caractérisé en ce que** c'est un répondeur (10') qui comprend un émetteur-récepteur à infrarouge pour la communication passant par l'interface sans contact (101-20).

37. Elément d'identification (10) selon l'une des revendications 32 à 35, **caractérisé en ce que** c'est une carte SIM (10).

38. Elément d'identification (10) selon la revendication précédente, **caractérisé en ce que** la carte SIM (10) est une carte de paiement.
